(19) Europäisches Patentamt
European Patent Office
Office européen des brevets

(11) EP 2 543 849 A1

# (12) EUROPEAN PATENT APPLICATION
published in accordance with Art. 153(4) EPC

(43) Date of publication:
09.01.2013 Bulletin 2013/02

(51) Int Cl.:
F02B 75/04 (2006.01)  F02D 15/02 (2006.01)
F02F 3/00 (2006.01)

(21) Application number: 10847022.0

(22) Date of filing: 02.03.2010

(86) International application number:
PCT/JP2010/053730

(87) International publication number:
WO 2011/108120 (09.09.2011 Gazette 2011/36)

(84) Designated Contracting States:
AT BE BG CH CY CZ DE DK EE ES FI FR GB GR
HR HU IE IS IT LI LT LU LV MC MK MT NL NO PL
PT RO SE SI SK SM TR

(71) Applicant: Toyota Jidosha Kabushiki Kaisha
Toyota-shi, Aichi 471-8571 (JP)

(72) Inventor: ASHIZAWA, Takeshi
Toyota-shi
Aichi 471-8571 (JP)

(74) Representative: TBK
Bavariaring 4-6
80336 München (DE)

## (54) COMBUSTION PRESSURE CONTROL DEVICE

(57) A combustion pressure control system of an internal combustion engine provided with a fluid sealing member 63 which is filled with a compressible fluid inside and which is arranged at a piston 3 and a channel 75 of a coolant for adjusting a temperature of the compressible fluid at the inside of the fluid sealing member 63. When a pressure of a combustion chamber reaches a predetermined pressure, the fluid sealing member 63 contracts, whereby the volume of the combustion chamber increases. The combustion pressure control system is formed to run coolant through the channel 75 to adjust the temperature of the compressible fluid and adjust the pressure inside of the fluid spring.

Fig.20

**Description**

Technical Field

The present invention relates to a combustion pressure control system.

Background Art

An internal combustion engine supplies a combustion chamber with fuel and air and burns the fuel in the combustion chamber to output a drive force. When burning the fuel in the combustion chamber, the mixture of the air and fuel is compressed in state. It is known that the compression ratio of an internal combustion engine has an effect on the output and fuel consumption. By raising the compression ratio, the output torque can be made larger and the fuel consumption can be reduced.

Japanese Patent Publication (A) No. 2000-230439 discloses a self-ignition type of internal combustion engine which provides a sub chamber communicated with a combustion chamber through a pressure regulating valve and configures the pressure regulating valve by a valve element and a stem which is connected to the valve element and is biased to the combustion chamber side. This self-ignition type of internal combustion engine is disclosed to push up the pressure regulating valve against the pressure of an elastic body so as to release pressure to the sub chamber when excessively early ignition etc. causes the combustion pressure to exceed a predetermined allowable pressure. This publication discloses the pressure regulating valve operating by a pressure larger than the pressure generated by excessively early ignition etc.

Japanese Patent Publication (A) No. 2006-522895 discloses a piston in which is built a disk spring, between a piston and connecting rod, which acts so as to bias the connecting rod in an opposite direction to a piston crown. Further, it discloses the piston crown moving on an axis relating to the connecting rod. In this piston, it is disclosed that when the piston passes top dead center, the energy which is stored in the disk spring is released and leads to the generation of output torque.

WO96/34190 discloses an internal combustion engine which is provided with a top side part which includes a crown which has a seal ring and a bottom side part which has a holder of a piston pin. It is disclosed to arrange a piston with the top side part and the bottom side part elastically connected by a mechanical spring. It is disclosed that the mechanical spring is attached to a top wall of the crown and the inside of a skirt.

Japanese Patent Publication (A) No. 2009-507171 discloses an assembly type liquid-cooled piston which has a top side part and a bottom side part where the top side part and the bottom side part are connected through a ring-shaped carrying part at the outside in the radial direction and a ring-shaped carrying part at the inside in the radial direction. In the piston, an outside cooling passage is formed between the outside carrying part and the inside carrying part, while an inside cooling passage is formed at the inside in the radial direction at the inside carrying part. It is disclosed that by running cooling oil through these cooling passages, the piston is cooled.

Citations List

Patent Literature

PLT 1: Japanese Patent Publication (A) No. 2000-230439
PLT 2: Japanese Patent Publication (A) No. 2006-522895
PLT 3: WO96/34190
PLT 4: Japanese Patent Publication (A) No. 2009-507171

Summary of Invention

Technical Problem

In a spark ignition type of internal combustion engine, a mixture of fuel and air in a combustion chamber is ignited by an ignition device, whereby the air-fuel mixture burns and the piston is pushed down. At this time, the compression ratio is raised to improve the thermal efficiency. In this regard, if the compression ratio is raised, abnormal combustion sometimes occurs. For example, by raising the compression ratio, the self-ignition phenomenon sometimes occurs.

To prevent the occurrence of abnormal combustion, it is possible to retard the ignition timing. However, by retarding the ignition timing, the output torque becomes smaller and the fuel consumption deteriorates. Further, by retarding the ignition timing, the temperature of the exhaust gas becomes higher. For this reason, high quality materials become necessary for the component parts of the exhaust purification system and a system for cooling the exhaust gas sometimes becomes necessary. Furthermore, to lower the temperature of the exhaust gas, sometimes the air-fuel ratio when burning fuel in the combustion chamber is made less than the stoichiometric air-fuel ratio. That is, sometimes the air-fuel ratio at the time of combustion is made rich. However, when a three-way catalyst is arranged as the exhaust purification system, if the air-fuel ratio of the exhaust gas deviates from the stoichiometric air-fuel ratio, there is the problem that the purification ability ends up becoming smaller and the exhaust gas can no longer be sufficiently purified.

In the internal combustion engine which is disclosed in the above Japanese Patent Publication (A) No. 2000-230439, a space which is communicated with the combustion chamber is formed at the cylinder head and a mechanical spring is arranged in this space. However, when arranging a mechanical spring at the cylinder head, it is not possible to increase the size of the mechanical spring and it is liable to not be possible to obtain a sufficient pushing force.

The above Japanese Patent Publication (A) No. 2006-522895 or WO96/34190 discloses an internal combustion engine in which a mechanical spring is arranged at the piston. However, a mechanical spring which is arranged at a piston is liable to be insufficient in amount of deformation whereby a sufficient stroke is liable not to be able to be secured. Therefore, control of the pressure inside of the cylinder has been difficult.

The present invention has as its object the provision of a combustion pressure control system of an internal combustion engine which suppresses to the occurrence of abnormal combustion.

Solution to Problem

The combustion pressure control system of the present invention is a combustion pressure control system of an internal combustion engine in which fuel is burned in a combustion chamber to make a piston move in a reciprocating manner, wherein the system is provided with a fluid spring which is filled with a compressible fluid at the inside and which is arranged at the piston and a spring temperature adjustment device which adjusts a temperature of the compressible fluid at the inside of the fluid spring. The combustion pressure control system is formed so that if the pressure of the combustion chamber reaches a predetermined pressure, the change of the pressure of the combustion chamber is used as a drive source to cause the fluid spring to compress, whereby a volume of the combustion chamber increases. The combustion pressure control system uses the spring temperature adjustment device to adjust the temperature of the compressible fluid and adjust the pressure inside of the fluid spring.

In the above invention, preferably the spring temperature adjustment device includes a channel through which a coolant runs inside of the piston around the fluid spring and a coolant feed device which feeds coolant to the channel, the coolant feed device includes at least one of a coolant temperature regulator which adjusts a temperature of the coolant and a coolant flow rate regulator which adjusts a flow rate of a coolant, and at least one of the temperature of the coolant and the flow rate of the coolant is adjusted to change the temperature of the members around the fluid spring so as to adjust the pressure inside of the fluid spring.

In the above invention, the coolant feed device includes a first channel through which a coolant runs between the fluid spring and combustion chamber.

In the above invention, preferably the coolant feed device includes a second channel through which a coolant runs around the fluid spring at an opposite side from the side facing the combustion chamber and, when raising the pressure inside of the fluid spring, at least one of the temperature of the coolant which runs through the first channel and flow rate of the coolant is adjusted, while when lowering the pressure inside of the fluid spring, at least one of the temperature of the coolant which runs through the second channel and flow rate of the coolant is adjusted.

In the above invention, preferably the piston includes a stopping part which makes the operation of extension of the fluid spring stop at a predetermined position and a speed reducing device which reduces the speed when the fluid spring extends.

In the above invention, preferably the piston includes a piston body which is connected to a connecting rod which transmits reciprocating operation and a covering member which has a crown surface of the piston, the fluid spring is arranged at a surface of the piston body facing the combustion chamber, and the covering member is formed so as to cover the fluid spring and to slide with respect to the piston body together with extension and contraction of the fluid spring.

Advantageous Effects of Invention

According to the present invention, it is possible to provide a combustion pressure control system of an internal combustion engine which suppresses the occurrence of abnormal combustion.

Brief Description of Drawings

FIG. 1 is a schematic view of an internal combustion engine in an Embodiment 1.

FIG. 2 is a cutaway perspective view of a first piston in the Embodiment 1.

FIG. 3 is a view which explains a pressure of a combustion chamber and an amount of contraction of a fluid spring in an internal combustion engine which is provided with the piston of the Embodiment 1.

FIG. 4 is a graph which explains the relationship between an ignition timing and output torque in a comparative example.

FIG. 5 is a graph which explains the relationship between a crank angle and a pressure of a combustion chamber in a comparative example.

FIG. 6 is a graph which explains the relationship between a load and a maximum pressure of a combustion chamber in a comparative example.

FIG. 7 is an enlarged view of a graph for when the pressure of the combustion chamber reaches a control pressure in an internal combustion engine which is provided with the piston of the Embodiment 1.

FIG. 8 is a graph which explains an ignition timing of an internal combustion engine in the Embodiment 1 and an internal combustion engine of a comparative example.

FIG. 9 is a cutaway perspective view of a second piston in the Embodiment 1.

FIG. 10 is a cutaway perspective view of a third piston in the Embodiment 1.

FIG. 11 is a cutaway perspective view of a fourth piston in the Embodiment 1.

FIG. 12 is a cutaway perspective view of a fifth piston in the Embodiment 1.

FIG. 13 is a cutaway perspective view of a sixth piston in the Embodiment 1.

FIG. 14 is a cutaway perspective view of a seventh piston in the Embodiment 1.

FIG. 15 is a cutaway perspective view of an eighth piston in the Embodiment 1.

FIG. 16 is an enlarged schematic cross-sectional view of a bellows part of a fluid sealing member of the eighth piston in the Embodiment 1.

FIG. 17 is a schematic cross-sectional view of a fluid sealing member of the eighth piston in the Embodiment 1 and a fluid sealing member of a comparative example.

FIG. 18 is a cutaway perspective view of a ninth piston in the Embodiment 1.

FIG. 19 is a cutaway perspective view of a tenth piston in the Embodiment 1.

FIG. 20 is a cutaway perspective view of a first piston in an Embodiment 2.

FIG. 21 is a schematic cross-sectional view of a piston body of the first piston in the Embodiment 2.

FIG. 22 is a schematic cross-sectional view of an engine body which is provided with the first piston of the Embodiment 2.

FIG. 23 is a system diagram of a lubrication oil feed system of an internal combustion engine which is provided with the first piston of the Embodiment 2.

FIG. 24 is a schematic view of a pressure detection device which detects a pressure inside of a fluid spring in the Embodiment 2.

FIG. 25 is a graph which explains the relationship between a speed of an internal combustion engine and a knock margin ignition timing in a comparative example.

FIG. 26 is a graph which explains the relationship between a speed of an internal combustion engine and a control pressure in the Embodiment 2.

FIG. 27 is a graph which explains the relationship between an alcohol concentration which is contained in fuel and a retardation correction amount in a comparative example.

FIG. 28 is a graph which explains the relationship between an alcohol concentration and a control pressure in the Embodiment 2.

FIG. 29 is a schematic cross-sectional view of another engine body which is provided with the first piston in the Embodiment 2.

FIG. 30 is an enlarged schematic cross-sectional view of a second piston and a connecting rod in the Embodiment 2.

FIG. 31 is a system diagram of a lubrication oil feed system of an internal combustion engine which is provided with the second piston in the Embodiment 2.

FIG. 32 is a schematic cross-sectional view of a third piston and a connecting rod in the Embodiment 2.

FIG. 33 is a schematic cross-sectional view of a piston body of a third piston in the Embodiment 2.

FIG. 34 is a cutaway perspective view of a fourth piston in the Embodiment 2.

FIG. 35 is a cutaway perspective view of a fifth piston in the Embodiment 2.

FIG. 36 is an enlarged cutaway perspective view of a sixth piston in the Embodiment 2.

FIG. 37 is an enlarged cutaway perspective view of a seventh piston in the Embodiment 2.

FIG. 38 is a cutaway perspective view of a first piston in an Embodiment 3.

FIG. 39 is a schematic view of a direction control valve which is attached to an inlet part of the fluid sealing member of the first piston in the Embodiment 3.

FIG. 40 is a schematic cross-sectional view of a second piston in the Embodiment 3.

FIG. 41 is a schematic cross-sectional view of a third piston in the Embodiment 3.

FIG. 42 is a schematic view of a direction control valve which is attached to an outlet part of the fluid sealing member in the Embodiment 3.

FIG. 43 is a schematic cross-sectional view of a piston in an Embodiment 4.

FIG. 44 is an enlarged schematic cross-sectional view of a part of a speed reducing device of the piston in the Embodiment 4.

Description of Embodiments

Embodiment 1

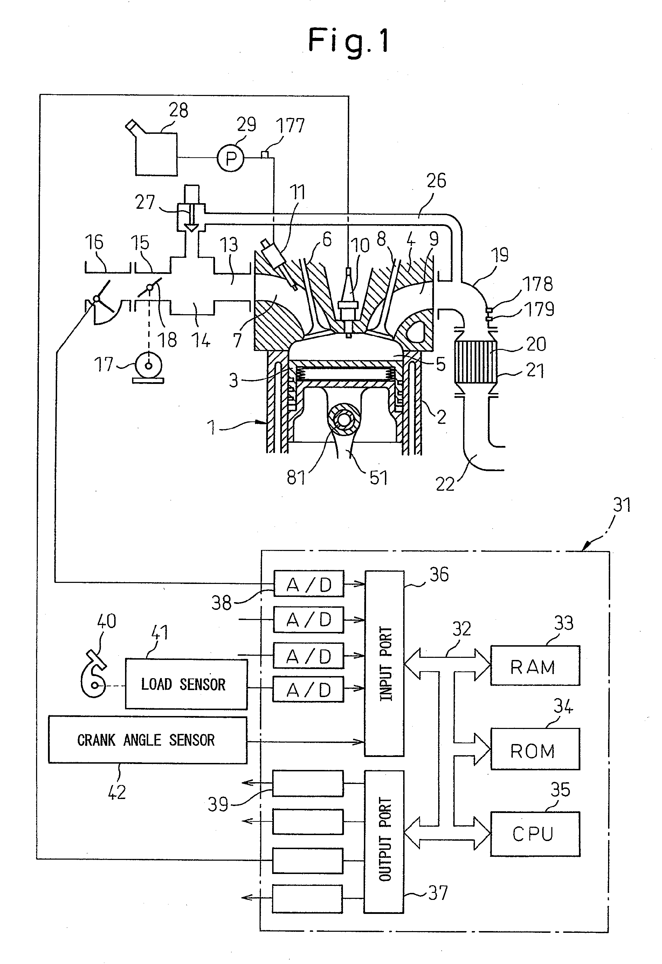

Referring to FIG. 1 to FIG. 19, a combustion pressure control system of an internal combustion engine in an Embodiment 1 will be explained. In the present embodiment, an internal combustion engine which is arranged in a vehicle will be explained as an example.

FIG. 1 is a schematic view of an internal combustion engine in the present embodiment. The internal combustion engine in the present embodiment is a spark ignition type. The internal combustion engine is provided with an engine body 1. The engine body 1 includes a cylinder block 2 and a cylinder head 4. At the inside of the cylinder block 2, pistons 3 are arranged. Each piston 3 moves in a reciprocating manner inside of the cylinder block 2. In the present invention, the space which is surrounded by a crown surface of the piston and the cylinder head when the piston reaches compression top dead center or the space inside of a cylinder which is surrounded by the crown surface of the piston at any position and the cylinder head is called a "combustion chamber". A combustion chamber 5 is formed for each cylinder. Each piston 3 is connected to a connecting rod 51 as a connecting member. The connecting rod 51 is connected to the piston 3 through a piston pin 81. Each combustion chamber 5 is connected to an engine intake passage and an engine exhaust passage. The engine intake passage is a passage for feeding the combustion chamber 5 with air or a mixture of fuel and air. The engine exhaust passage is a passage for exhausting exhaust gas generated by combustion by fuel inside of the combustion chamber 5.

The cylinder head 4 is formed with intake ports 7 and exhaust ports 9. An intake valve 6 is arranged at an end part of each intake port 7 and is formed to be able to open and close the engine intake passage communicated with each combustion chamber 5. An exhaust valve 8 is arranged at an end part of each exhaust port 9 and is formed to be able to open and close the engine exhaust passage communicated with each combustion chamber 5. The cylinder head 4 has spark plugs 10 fastened to it as ignition devices. Each spark plug 10 is formed so as to ignite fuel in each combustion chamber 5.

The internal combustion engine in the present embodiment is provided with fuel injectors 11 for feeding fuel to the combustion chambers 5. Each fuel injector 11 in the present embodiment is arranged so as to inject fuel into an intake port 7. The fuel injector 11 is not limited to this. It is sufficient that it be arranged so as to be able to feed fuel into the combustion chamber 5. For example, the fuel injector may also be arranged to directly inject fuel into the combustion chamber.

Each fuel injector 11 is connected through an electronically controlled variable discharge fuel pump 29 to a fuel tank 28. Fuel which is stored inside of the fuel tank 28 is fed by the fuel pump 29 to the fuel injector 11. In the middle of the channel which feeds the fuel, a fuel property sensor 177 is arranged as a fuel property detection device which detects a property of the fuel. For example, in an internal combustion engine which uses a fuel which contains alcohol, an alcohol concentration sensor is arranged as the fuel property sensor 177. The fuel property detection device may also be arranged at the fuel tank.

The intake port 7 of each cylinder is connected through a corresponding intake runner 13 to a surge tank 14. The surge tank 14 is connected through an intake duct 15 and an air flow meter 16 to an air cleaner (not shown). Inside the intake duct 15, an air flow meter 16 is arranged which detects the intake air amount. Inside of the intake duct 15, a throttle valve 18 is arranged which is driven by a step motor 17. On the other hand, the exhaust port 9 of each cylinder is connected to a corresponding exhaust runner 19. The exhaust runner 19 is connected to a catalytic converter 21. The catalytic converter 21 in the present embodiment includes a three-way catalyst 20. The catalytic converter 21 is connected to an exhaust pipe 22. Inside the engine exhaust passage, a temperature sensor 178 is arranged for detecting the temperature of the exhaust gas.

The engine body 1 in the present embodiment has a recirculation passage for performing exhaust gas recirculation (EGR). In the present embodiment, an EGR gas conduit 26 is arranged as a recirculation passage. The EGR gas conduit 26 connects the exhaust runners 19 and the surge tank 14 with each other. Inside the EGR gas conduit 26, an EGR control valve 27 is arranged. The EGR control valve 27 is formed to be adjustable in flow rate of the recirculating exhaust gas. If the ratio of the air and fuel (hydrocarbons) of the exhaust gas which is supplied to the engine intake passage, combustion chamber, or engine exhaust passage is referred to as the air-fuel ratio (A/F) of the exhaust gas, an air-fuel ratio sensor 179 is arranged at the upstream side of the catalytic converter 21 inside the engine exhaust passage for detecting the air-fuel ratio of the exhaust gas.

The internal combustion engine in the present embodiment is provided with an electronic control unit 31. The electronic control unit 31 in the present embodiment is comprised of a digital computer. The electronic control unit 31 includes components which are connected with each other through a bidirectional bus 32 such as a RAM (random access memory) 33, ROM (read only memory) 34, CPU (microprocessor) 35, input port 36, and output port 37.

The air flow meter 16 generates an output voltage which is proportional to the amount of intake air which is taken into each combustion chamber 5. This output voltage is input through a corresponding AD converter 38 to the input port 36. An accelerator pedal 40 has a load sensor 41 connected to it. The load sensor 41 generates an output voltage which is proportional to an amount of depression of the accelerator pedal 40. This output voltage is input through a corresponding AD converter 38 to the input port 36. Further, a crank angle sensor 42 generates an output pulse every time a crankshaft rotates by, for example, 30°. This output pulse is input to the input port 36. The output of the crank angle sensor 42 may be used to detect the speed of the engine body 1. Furthermore, the electronic control unit 31 receives as input signals of sensors such as the fuel property sensor 177, temperature sensor 178, and air-fuel ratio sensor 179.

The output port 37 of the electronic control unit 31 is connected through respectively corresponding drive circuits 39 to the fuel injectors 11 and the spark plugs 10. In the present embodiment, the electronic control unit 31 is formed to control fuel injection and control ignition. That is, the timing of injection and the amount of injection of fuel are controlled by the electronic control unit 31. Furthermore, the ignition timing of the spark plugs 10 is controlled by the electronic control unit 31. Further, the output port 37 is connected through corresponding drive circuits 39 to the step motor 17 which drives the throttle valve 18, the fuel pump 29, and the EGR control valve 27. These devices are controlled by the electronic control unit 31.

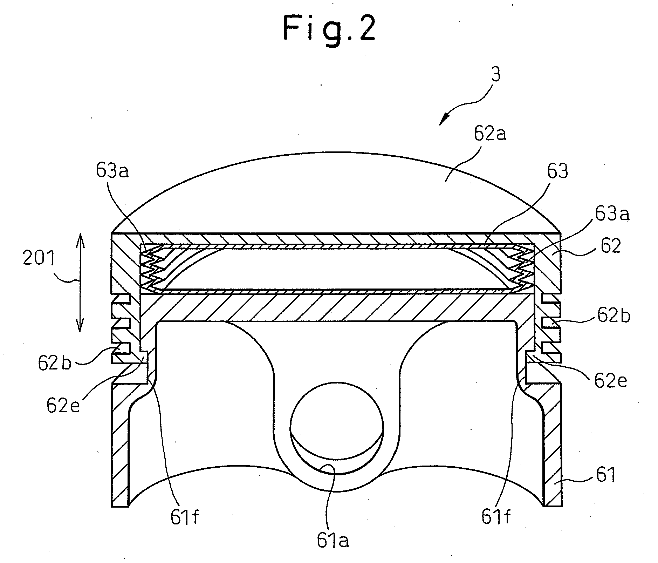

FIG. 2 is a cutaway perspective view of a first piston in the present embodiment. The internal combustion engine in the present embodiment is provided with a combustion pressure control system which controls the pressure of a combustion chamber when fuel is burned, that is, the cylinder pressure. The combustion pressure control system in the present embodiment includes a piston 3.

The first piston 3 in the present embodiment is provided with a piston body 61. The piston body 61 is formed into a tubular shape. The piston body 61 is connected to the connecting rod which transmits reciprocating motion of the piston 3. The piston body 61 is supported by a connecting rod 51. The piston body 61 has a hole part 61a for insertion of the piston pin 81.

The piston 3 in the present embodiment includes a fluid spring which is arranged at the surface of the piston body 61 at the side facing the combustion chamber 5. The fluid spring in the present embodiment includes a fluid sealing member 63. The fluid sealing member 63 is formed to enable a compressible fluid to be sealed inside it. Inside of the fluid sealing member 63, a pressurized fluid is sealed. In the present embodiment, air is sealed so that the fluid sealing member 63 starts to contract by a pressure of the combustion chamber which is smaller than the pressure of the combustion chamber at which abnormal combustion occurs. The fluid sealing member 63 is formed to have a cylindrical outer shape. The fluid sealing member 63 has a bellows part 63a as a deformation part at the parts forming the side surfaces. The fluid sealing member 63 is formed so as to be able to extend and contract in the direction which is shown by the arrow 201 due to deformation of the bellows part 63a.

The piston 3 in the present embodiment includes a covering member 62. The covering member 62 is formed so as to cover the fluid sealing member 63. The covering member 62 has a top plate 62a which forms a partition of the combustion chamber 5. The outside surface of the top plate 62a forms the crown surface of the piston 3. The covering member 62 is formed in a tubular shape. The side surfaces of the covering member 62 are formed with groove parts 62b. In the groove parts 62b, piston rings are arranged. For example, in the groove parts 62b, compression rings which suppress leakage of the combustion gas and oil rings which remove excess lubrication oil from the wall surfaces of the combustion chamber 5 are arranged.

The fluid sealing member 63 is arranged at the inside of the covering member 62. The covering member 62 is formed so as to fit with the piston body 61. The covering member 62 is formed so as to slide relative to the piston body 61 in the direction which is shown by the arrow 201. The covering member 62 is formed so as to slide at the top part of the piston body 61.

The covering member 62 has a stopping part 62e which functions as a stopper. The stopping part 62e in the present embodiment sticks out toward the piston body 61. The stopping part 62e is arranged at the inside of a recessed part 61f which is formed in the piston body 61. When the fluid sealing member 63 extends, the stopping part 62e contacts the wall surface of the recessed part 61f whereby the fluid sealing member 63 can be made to stop at a predetermined amount of extension. Further, the stopping part 62e can prevent the covering member 62 from being pulled out from the piston body 61.

In the combustion pressure control system in the present embodiment, when the pushing force due to the pressure of the combustion chamber 5 from the compression stroke to the expansion stroke in the combustion cycle becomes larger than the reaction force due to the pressure inside of the fluid spring, the fluid sealing member 63 contracts. The covering member 62 slides with respect to the piston body 61 toward the opposite side to the side facing the combustion chamber 5. As a result, the volume of the combustion chamber 5 increases and the pressure rise of the combustion chamber 5 can be suppressed. After this, when the pushing force due to the pressure of the combustion chamber 5 becomes smaller than the reaction force due to the pressure inside of the fluid spring, the fluid sealing member extends and returns to the original size.

The combustion pressure control system in the present embodiment uses the change of the pressure of the combustion chamber 5 as a source of drive power for change of the volume of the fluid sealing member 63 when the pressure of the combustion chamber 5 reaches the control pressure. The fluid sealing member 63 extends and contracts when the pressure of the combustion chamber 5 changes. The control pressure in the present invention is the pressure of the combustion chamber when the volume of the fluid spring starts to change. Inside of the fluid sealing member 63, a fluid of a pressure corresponding to the control pressure is sealed. When the pressure of the combustion chamber 5 becomes the control pressure, the fluid sealing member 63 starts to contract. The combustion pressure control system in the present embodiment sets the control pressure so that the pressure of the combustion chamber 5 does not become the pressure of occurrence of abnormal combustion or more.

The "abnormal combustion" in the present invention, for example, includes the ignition device igniting the fuel-air mixture and combustion in a state other than one of successive propagation of combustion from the point of ignition. "Abnormal combustion", for example, includes the knocking phenomenon, the detonation phenomenon, and the pre-ignition phenomenon. The knocking phenomenon includes the spark knock phenomenon. The spark knock phenomenon is the phenomenon where the ignition device ignites the fuel and a flame spreads from the ignition device at the center during which the fuel-air mixture including unburned fuel at a position far from the ignition device self ignites. The fuel-air mixture at a position far from the ignition device is compressed by the combustion gas near the ignition device and thereby becomes a high temperature and high pressure resulting in self ignition. When the fuel-air mixture self ignites, a shock wave is generated.

The detonation phenomenon is the phenomenon where the fuel-air mixture ignites due to a shock wave passing through a high temperature, high pressure fuel-air mixture. This shock wave is, for example, generated by the spark knock phenomenon.

The pre-ignition phenomenon is also referred to as the "early ignition phenomenon". The pre-ignition phenomenon is the phenomenon where metal at the front end of the spark plug or carbon sludge which is deposited inside the combustion chamber is heated and a predetermined temperature or more is maintained whereby this part serves as the source for ignition and combustion of the fuel before the ignition timing occurs.

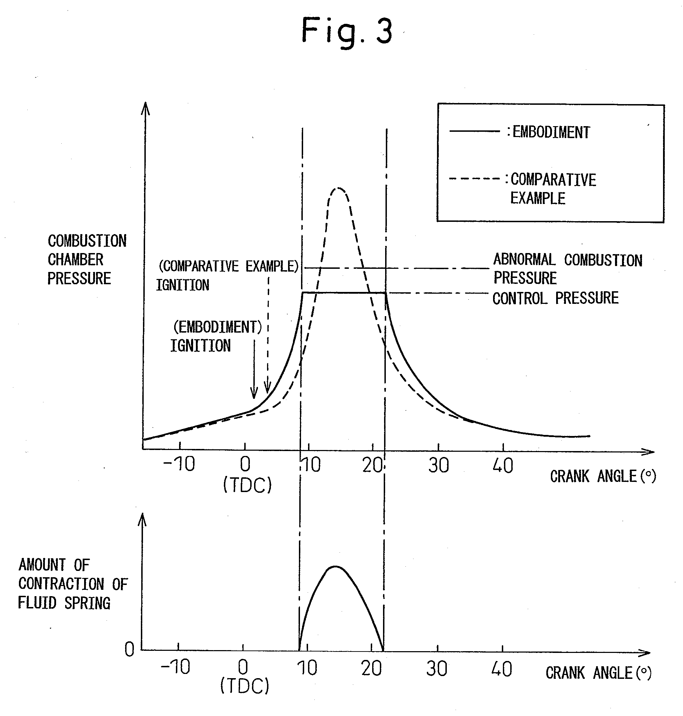

FIG. 3 is a graph of the pressure of a combustion chamber in the internal combustion engine of the present embodiment. The abscissa indicates the crank angle, while the ordinate indicates the pressure of the combustion chamber and the amount of contraction of the fluid spring. FIG. 3 shows graphs of the compression stroke and expansion stroke in the combustion cycle. The amount of contraction of the fluid sealing member 63 forming the fluid spring is a value of zero when the stopping part 62e stops the operation of extension of the fluid sealing member 63. In the combustion pressure control system in the present embodiment, if the pressure of the combustion chamber 5 reaches the control pressure in the period from the compression stroke to the expansion stroke in the combustion cycle, the fluid sealing member 63 contracts. The covering member 62 moves with respect to the piston body 61. The volume of the combustion chamber 5 increases and the pressure rise is suppressed.

Referring to FIG. 2 and FIG. 3, in the compression stroke, the piston 3 rises and the pressure of the combustion chamber 5 rises. Here, the fluid sealing member 63 is sealed with a fluid of a pressure corresponding to the control pressure, so until the pressure of the combustion chamber 5 becomes the control pressure, the amount of contraction of the fluid sealing member 63 is zero. In the example which is shown in FIG. 3, ignition is performed slightly after a crank angle 0° (TDC). Due to ignition, the pressure of the combustion chamber 5 rapidly rises. When the pressure of the combustion chamber 5 reaches the control pressure, the fluid sealing member 63 starts to contract. The covering member 62 starts to move relative to the piston body 61. When the combustion of the air-fuel mixture advances, the amount of contraction of the fluid sealing member 63 becomes larger. For this reason, the rise of the pressure of the combustion chamber 5 is suppressed. In the example which is shown in FIG. 3, the pressure of the combustion chamber 5 is held substantially constant.

In the combustion chamber 5, if fuel combustion further advances, the amount of contraction of the fluid sealing member 63 becomes maximum, then decreases. The pressure inside of the fluid sealing member 63 is reduced toward the original pressure. When the pressure of the combustion chamber 5 becomes the control pressure, the amount of contraction of the fluid sealing member 63 returns to zero. When the pressure of the combustion chamber 5 becomes less than the control pressure, the pressure of the combustion chamber 5 is reduced along with the advance of the crank angle.

In this way, the combustion pressure control system in the present embodiment suppresses the rise in the pressure of the combustion chamber when the pressure of the combustion chamber 5 reaches the control pressure and performs control so that the pressure of the combustion chamber does not become the pressure at which abnormal combustion occurs or more.

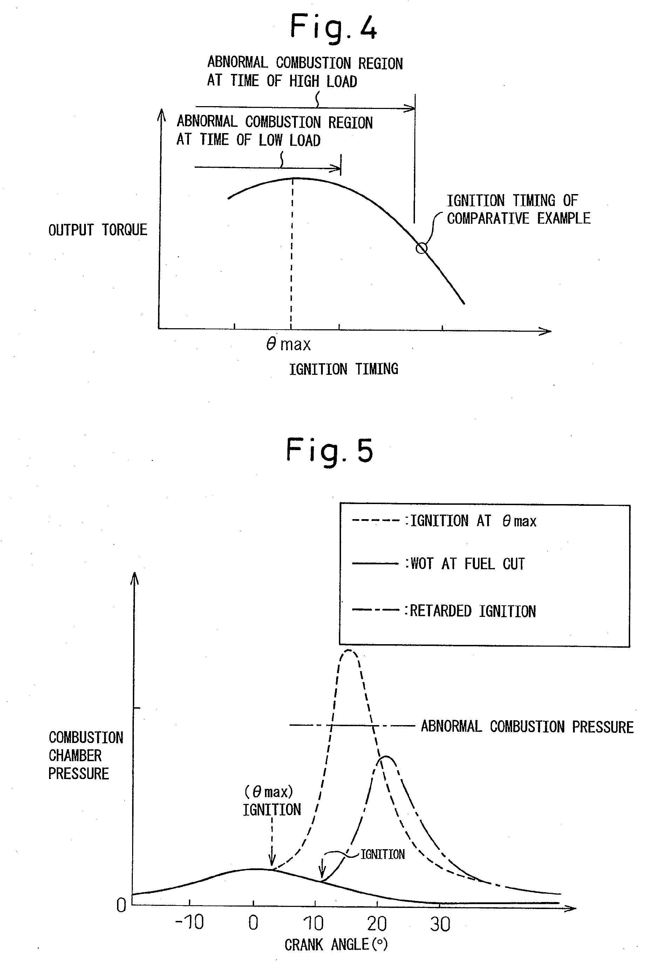

FIG. 4 shows a graph for explaining the relationship between the ignition timing and the output torque in an internal combustion engine of a comparative example. The internal combustion engine of the comparative example does not have a fluid spring. That is, the internal combustion engine of the comparative example does not have the fluid sealing member 63 in the present embodiment, and the covering member and the piston body are formed integrally. The graph of FIG. 4 is a graph of when operating the internal combustion engine of the comparative example in a predetermined state. The abscissa shows the crank angle (ignition timing) at the time of ignition.

It is learned that the performance of an internal combustion engine changes depending on the timing of ignition of the fuel-air mixture. An internal combustion engine has an ignition timing ($\theta$max) at which the output torque becomes maximum. The ignition timing at which the output torque becomes maximum changes depending on the engine speed, the throttle opening degree, the air-fuel ratio, the compression ratio, etc. By ignition at the ignition timing at which the output torque becomes maximum, the pressure of the combustion chamber becomes higher and the thermal efficiency becomes better. Further, the output torque becomes larger and the fuel consumption can be reduced. Further, the carbon dioxide which is exhausted can be reduced.

In this regard, if advancing the ignition timing, the knocking phenomenon and other abnormal combustion will occur. In particular, at a high load, the region of occurrence of abnormal combustion becomes larger. In the internal combustion engine of the comparative example, to avoid abnormal combustion, ignition is performed retarded from the ignition timing ($\theta$max) at which the output torque becomes maximum. In this way, an ignition timing avoiding the region where abnormal combustion occurs is selected.

FIG. 5 is a graph of the pressure of a combustion chamber of the internal combustion engine of the comparative example. The solid line shows the pressure of the combustion chamber when stopping the feed of fuel (fuel cut) and making the opening degree of the throttle valve wide open (WOT). The pressure of the combustion chamber at this time becomes maximum when the crank angle is 0°, that is, at compression top dead center. This pressure becomes the maximum pressure of the combustion chamber when not supplying fuel.

In an internal combustion engine, the pressure of a combustion chamber fluctuates depending on the ignition timing. The graph which is shown by the broken line is a graph when igniting at the ignition timing at which the output torque becomes maximum. The broken line is a graph of the case assuming no abnormal combustion occurs. In the example which is shown in FIG. 5, ignition is performed at a timing slightly after the crank angle 0° (TDC). In the case of ignition at the ignition timing at which the output torque becomes maximum, the pressure of the combustion chamber becomes higher. However, in an actual internal combustion engine, the maximum pressure of the combustion chamber (Pmax) becomes larger than the pressure at which abnormal combustion occurs, so the ignition timing is retarded. The one-dot chain line is a graph when retarding the ignition timing. When retarding the ignition timing, the maximum pressure of the combustion chamber becomes smaller than when igniting at the ignition timing at which the output torque becomes maximum.

Referring to FIG. 3, the broken line is a graph of the case of ignition at the ignition timing ($\theta$max) where the output torque becomes maximum in the internal combustion engine of the comparative example. As explained above, when igniting at this ignition timing, abnormal combustion occurs.

As opposed to this, the internal combustion engine in the present embodiment can perform combustion at a maximum pressure of the combustion chamber less than the pressure at which abnormal combustion occurs. Even if advancing the ignition timing, the occurrence of abnormal combustion can be suppressed. In particular, even in an engine with a high compression ratio, abnormal combustion can be suppressed. For this reason, compared with the internal combustion engine of the comparative example which retards the ignition timing shown in FIG. 5, the thermal efficiency can be improved and the output torque can be increased. Alternatively, the fuel consumption amount can be reduced.

Referring to FIG. 3, in the internal combustion engine of the present embodiment, ignition is performed at the ignition timing at which the thermal efficiency becomes the best. The internal combustion engine of the present embodiment can ignite the fuel at the ignition timing when the output torque of the internal combustion engine of the comparative example would become maximum. However, the internal combustion engine in the present embodiment makes the ignition timing earlier than the ignition timing at which the output torque of the internal combustion engine in the comparative example becomes maximum. Due to this configuration, the thermal efficiency can be improved more and the output torque can be increased more. In this way, the internal combustion engine in the present embodiment can ignite the fuel at the timing at which the thermal efficiency becomes the best while avoiding abnormal combustion.

In the present embodiment, the sealing pressure at the inside of the fluid sealing member 63 becomes higher than the control pressure. The control pressure can be made larger than the maximum pressure of the combustion chamber when stopping the feed of fuel. That is, it is possible to set it larger than the maximum pressure of the combustion chamber of the solid line graph which is shown in FIG. 5. Further, the control pressure can be set to less than the pressure at which abnormal combustion occurs.

In the internal combustion engine of the comparative example, the ignition timing is advanced, so the temperature of the exhaust gas becomes high. Alternatively, since the thermal efficiency is low, the temperature of the exhaust gas becomes high. In the internal combustion engine of the comparative example, to lower the temperature of the exhaust gas, sometimes the air-fuel ratio at the time of combustion is made smaller than the stoichiometric air-fuel ratio. In this regard, the three-way catalyst used in the exhaust purification system exhibits a high purification ability when the air-fuel ratio of the exhaust gas is near the stoichiometric air-fuel ratio. The three-way catalyst ends up becoming much smaller in purification performance if the air-fuel ratio of exhaust gas deviates from the stoichiometric air-fuel ratio. For this reason, if making the air-fuel ratio at the time of combustion smaller than the stoichiometric air-fuel ratio, the purification ability of the exhaust gas falls and the unburned fuel which is contained in the exhaust gas ends up becoming greater. Further, in the internal combustion engine of the comparative example, the temperature of the exhaust gas becomes high, so sometimes heat resistance of the exhaust purification system is demanded and high quality materials become necessary or a system for cooling the exhaust gas or a new structure for cooling the exhaust gas becomes necessary.

As opposed to this, in the internal combustion engine in the present embodiment, the thermal efficiency is high, so the temperature of the exhaust gas can be kept from becoming higher. In the internal combustion engine in the present embodiment, there is little need to reduce the air-fuel ratio at the time of combustion so as to lower the temperature of the exhaust gas. When the exhaust purification system includes a three-way catalyst, the purification performance can be maintained. Furthermore, since the temperature of the exhaust gas is kept from becoming high, the heat resistance of the members of the exhaust purification system which is demanded becomes lower. Alternatively, it is possible to form the system without newly adding a system, etc., for cooling the exhaust gas etc.

Further, referring to FIG. 3, in general, when raising the compression ratio of an internal combustion engine to raise the thermal efficiency, the maximum pressure Pmax of a combustion chamber can be increased. For this reason, it is necessary to increase the strength of the members forming the internal combustion engine. However, the internal combustion engine in the present embodiment can keep the maximum pressure of the combustion chamber from becoming larger and can keep the members from becoming larger. For example, the diameter of the connecting rod can be kept from becoming larger. Further, friction between the members can be kept from becoming greater and the fuel consumption can be kept from deteriorating.

Furthermore, when the maximum pressure of the combustion chamber is high, there is the problem that enlarging the diameter of the combustion chamber is difficult. If the diameter of the combustion chamber becomes larger, a need arises to increase the strength of the support parts of the piston and other members. However, in the present embodiment, the maximum pressure of the combustion chamber can be maintained low, so the required strength of the members can be kept low. For this reason, the diameter of the combustion chamber can be easily increased.

Next, the control pressure in the combustion pressure control system of the internal combustion engine of the present embodiment will be explained.

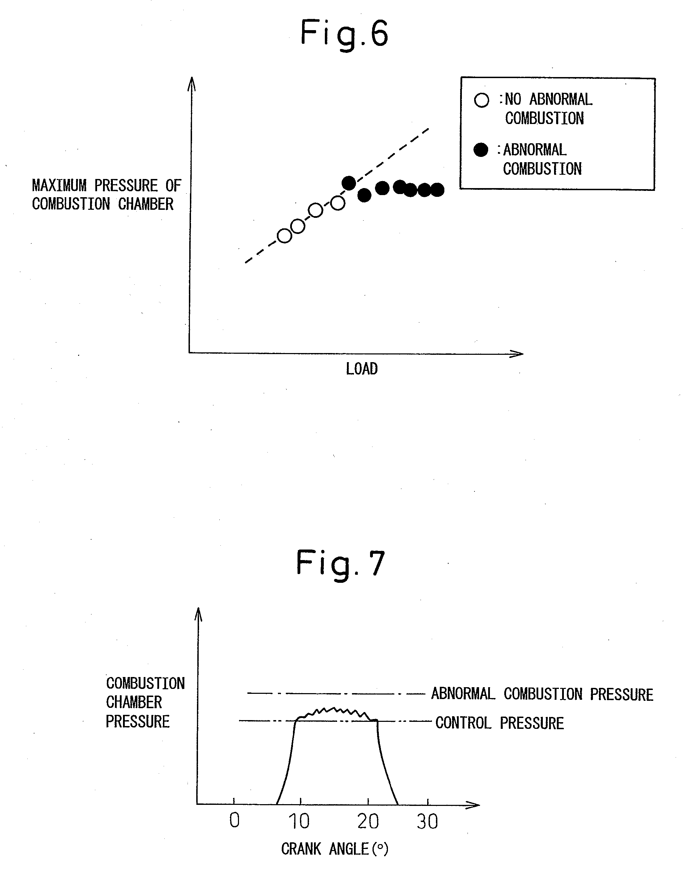

FIG. 6 is a graph which shows the relationship between the load of an internal combustion engine and the maximum pressure in a combustion chamber in the present invention. The load of an internal combustion engine corresponds to the amount of injection of fuel in the combustion chamber. When abnormal combustion does not occur, as shown by the broken line, the maximum pressure of the combustion chamber increases along with the increase of load. If becoming greater than a predetermined load, abnormal combustion occurs. It is learned that the maximum pressure of the combustion chamber when abnormal combustion occurs is substantially constant regardless of the load.

In the internal combustion engine of the present embodiment, the control pressure is set so that the pressure of the combustion chamber does not reach the pressure where abnormal combustion occurs. As the control pressure, a large pressure in the range where the maximum pressure of the combustion chamber at the time of combustion of fuel becomes smaller than the pressure of occurrence of abnormal combustion is preferable. The control pressure is preferably raised to near the pressure at which abnormal combustion occurs. Due to this configuration, thermal efficiency can be increased while suppressing abnormal combustion.

FIG. 7 is another graph of the pressure of a combustion chamber in the internal combustion engine in the present embodiment. Referring to FIG. 2 and FIG. 7, in the internal combustion engine of the present embodiment, due to the pressure of the combustion chamber reaching the control pressure, the covering member 62 moves relative to the piston body 61. At this time, sometimes the pressure inside of the fluid sealing member 63 rises. For this reason, sometimes the pressure inside of the combustion chamber 5 rises along with the rise of the pressure inside of the fluid sealing member 63. The graph of the pressure of the combustion chamber 5 is an upwardly bulging shape. Therefore, when setting the control pressure, it is preferable to set it low while anticipating the amount of rise of the pressure inside of the fluid sealing member 63 so that the pressure of the combustion chamber 5 does not reach the pressure of occurrence of abnormal combustion.

Next, the ignition timing of the internal combustion engine of the present embodiment will be explained.

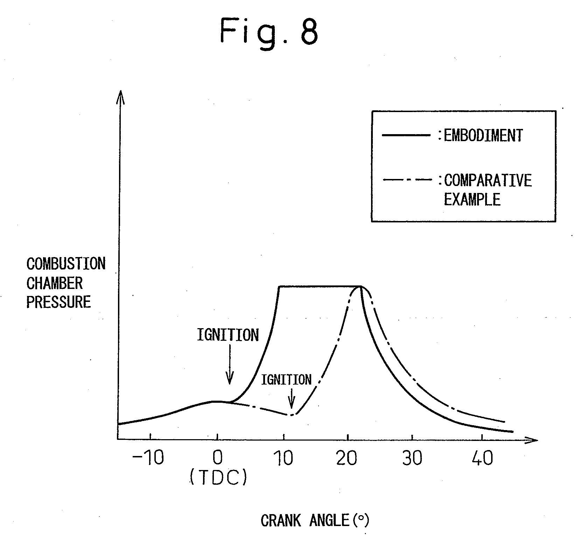

FIG. 8 is a graph of the pressure of a combustion chamber in the present embodiment and a comparative example. The solid line is a graph when ignition is performed at the timing when the output torque becomes maximum in the internal combustion engine of the present embodiment. The one-dot chain line is a graph of the case of retarding the ignition timing in the internal combustion engine of the comparative example.

The internal combustion engine in the present embodiment, as explained above, preferably selects the ignition timing $\theta$max at which the thermal efficiency of the internal combustion engine becomes maximum. However, the pressure of the combustion chamber at this ignition timing becomes high. For example, the pressure of the combustion chamber at the ignition timing of the present embodiment becomes larger than the pressure of the combustion chamber at the ignition timing of the comparative example. For this reason, depending on the internal combustion engine, sometimes sparks fail to fly and misfire ends up occurring. In particular, in the internal combustion engine of the present embodiment, ignition is performed near a crank angle 0° (TDC). With a crank angle near 0°, the pressure of the combustion chamber is high, so it is hard for sparks to fly. That is, the air density is high, so it is hard for electric discharge to occur.

Referring to FIG. 1, if the combustion chamber 5 misfires, the unburned fuel passes through the engine exhaust passage and flows into the exhaust purification system. In the present embodiment, the unburned fuel passes through the exhaust port 9 and flows into the three-way catalyst 20. In this case, sometimes the unburned fuel which flows into the three-way catalyst 20 becomes greater and the properties of the exhaust gas which is released into the atmosphere deteriorate. Alternatively, in the three-way catalyst 20, sometimes the unburned fuel burns and the three-way catalyst 20 becomes excessively hot.

Referring to FIG. 8, in an internal combustion engine liable to misfire in this way, the ignition timing can be made to advance. That is, the ignition timing can be made earlier. For example, the ignition timing can be made to advance more than the ignition timing at which the output torque becomes maximum. By making the ignition timing earlier, it is possible to cause ignition when the pressure of the combustion chamber is low and thereby suppress misfire.

Referring to FIG. 1 and FIG. 2, the combustion pressure control system in the present embodiment arranges a fluid spring in the piston. When arranging the fluid spring around the combustion chamber due to this configuration, the area of the fluid spring facing the combustion chamber can be increased. The amount of deformation when the fluid spring contracts and the volume of the combustion chamber changes can be increased. For example, when arranging the fluid spring at the top surface of the combustion chamber, the area facing the combustion chamber ends up becoming smaller since an intake valve, ignition device, etc. are arranged at the top surface of the combustion chamber. As opposed to this, in the present embodiment, the area facing the combustion chamber can be increased, so the amount of change of volume of the combustion chamber can be increased. Alternatively, the amount of movement of the fluid spring can be reduced and a combustion pressure control system which is excellent in response can be provided.

The fluid sealing member 63 of the first piston in the present embodiment is formed with a bellows part 63a as a deformation part at the parts forming the side surfaces. Due to this configuration, when the fluid sealing member 63 deforms, the bellows part 63a can be made to deform with priority. The parts other than the bellows part 63a can be kept from deforming and thereby degrading or breaking. The deformation part is not limited to a bellows shape. Any shape which deforms more easily than other parts can be employed. Alternatively, the deformation part can be formed by a material which deforms more easily than other parts.

The first piston in the present embodiment includes a covering member 62 which is formed so as to cover the fluid sealing member 63. By employing this configuration, the pressure of the combustion chamber 5 can be kept from being applied from the side of the fluid sealing member 63 (from the radial direction of the fluid sealing member). The fluid sealing member 63 can be kept from being compressed from the side and deformed. Further, by employing the covering member 62, the combustion gas of the combustion chamber 5 can be kept from directly contacting the fluid sealing member 63. The heat of the combustion gas of the combustion chamber 5 can be kept from being conducted to the fluid at the inside of the fluid sealing member 63. The temperature of the fluid at the inside of the fluid sealing member 63 can be kept from rising and the control pressure from changing.

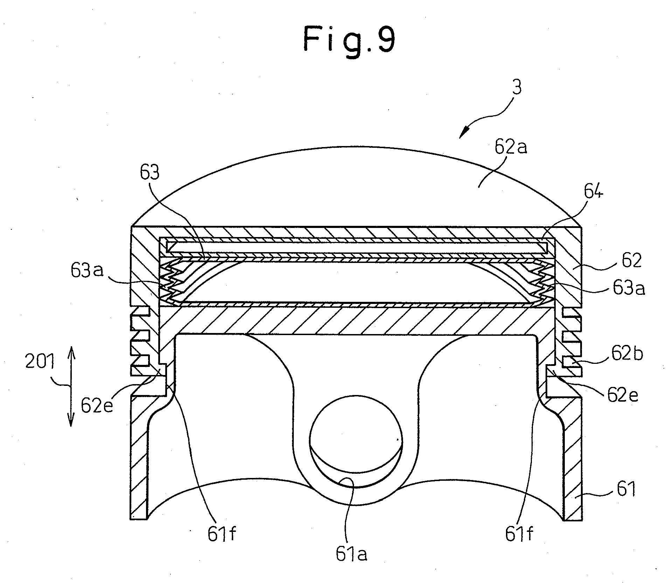

FIG. 9 is a cutaway perspective view of a second piston in the present embodiment. The second piston 3 in the present embodiment includes a heat insulating member 64 which is arranged between the fluid sealing member 63 and the combustion chamber 5. In the second piston, the heat insulating member 64 is arranged between the fluid sealing member 63 and the top plate 62a of the covering member 62. The covering member 62 is formed so as to cover the fluid sealing member 63 and the heat insulating member 64. The covering member 62 pushes the fluid sealing member 63 through the heat insulating member 64. The heat insulating member 64 is formed into a disk shape. The heat insulating member 64 in the present embodiment is formed so that the inside becomes a cavity. The inside cavity is sealed with air.

By arranging the heat insulating member 64 between the fluid sealing member 63 and the combustion chamber 5, the heat of the high temperature combustion gas of the combustion chamber 5 can be kept from being conducted to the fluid sealing member 63. The heat of the combustion gas of the combustion chamber 5 can therefore be kept from causing the temperature of the fluid at the inside of the fluid sealing member 63 to rise. The control pressure at which the covering member 62 starts to move can be kept from rising.

The heat insulating member 64 in the present embodiment is formed inside it with a cavity. The cavity is filled with air. By arranging a substance with a low thermal conductivity like air at the inside of the heat insulating member, an excellent heat insulating performance can be exhibited. As the substance which is filled inside of the heat insulating member 64, in addition to air, a gas with a small thermal conductivity may also be sealed. Alternatively, the cavity of the heat insulating member may be filled with a gas of a pressure lower than atmospheric pressure or the cavity may be made a vacuum. Alternatively, the cavity may be filled with a liquid. Alternatively, the heat insulating member 64 may contain ceramic members or a foam material or other substance with a small thermal conductivity.

In the present embodiment, a heat insulating member 64 is arranged at the inside of the covering member 62, but the invention is not limited to this. The heat insulating member 64 may be arranged between the fluid spring and the combustion chamber. For example, the heat insulating member 64 may be fastened to the outside surface of the top plate 62a of the covering member 62.

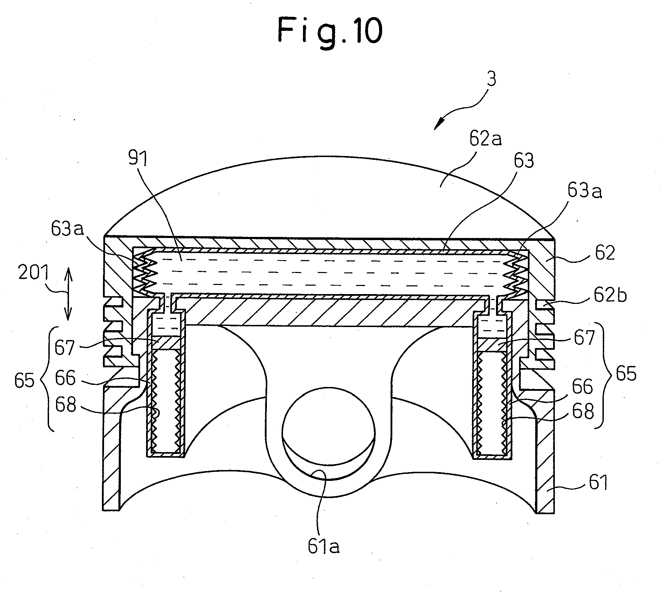

FIG. 10 is a cutaway perspective view of a third piston in the present embodiment. The third piston 3 in the present embodiment is provided with an auxiliary cylinder 65 which communicates with the inside of the fluid sealing member 63. The fluid spring includes the fluid sealing member 63 and the auxiliary cylinder 65. The auxiliary cylinder 65 in the present embodiment is formed into a ring shape. Inside of the fluid sealing member 63, oil 91 is sealed. The auxiliary cylinder 65 communicates with a communicating passage to the inside of the fluid sealing member 63. The auxiliary cylinder 65 has a container 66 and a movement member 67 which is arranged at the inside of the container 66. The movement member 67 is formed to be able to move in the direction which is indicated by the arrow 201 while preventing leakage of the oil 91.

The movement member 67 divides the inside of the container 66 into two spaces. At one space, oil 91 is filled. At the other space, the fluid sealing member 68 is arranged. The fluid sealing member 68 is formed into a ring shape. The side surfaces of the fluid sealing member 68 are formed into a bellows shape. The fluid sealing member 68 is formed to be able to extend and contract. The fluid sealing member 68 has pressurized gas sealed inside it so as to start to contract when the pressure of the combustion chamber reaches the control pressure. In the present embodiment, air is sealed in it.

In the third piston, when the pressure of the combustion chamber 5 reaches the control pressure, the movement member 67 is pushed by oil pressure and the fluid sealing member 68 contracts. The oil 91 flows from the fluid sealing member 63 to the auxiliary cylinder 65. The covering member 62 moves with respect to the piston body 61, so the pressure rise of the combustion chamber 5 can be suppressed. In this way, the fluid spring may also include a hydraulic cylinder.

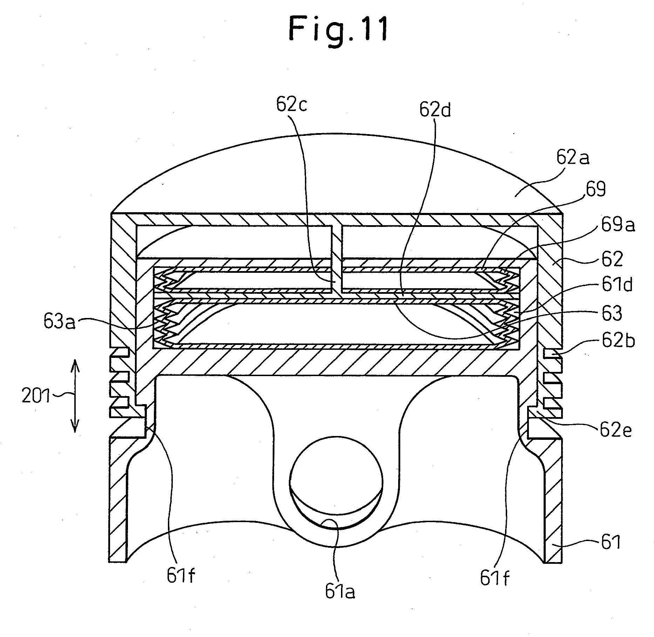

FIG. 11 is a cutaway perspective view of a fourth piston in the present embodiment. The fluid spring in the fourth piston 3 includes a fluid sealing member 63 and a fluid sealing member 69. The fluid sealing member 69 has a bellows part 69a and is formed to be able to extend and contract. At the inside of the fluid sealing member 63 and the inside of the fluid sealing member 69, pressurized gas is sealed.

The covering member 62 has a connecting part 62c which is connected to the top plate 62a. The connecting part 62c, for example, is formed in a rod shape. The connecting part 62c passes through the fluid sealing member 69. The covering member 62 has a partition part 62d which is connected to the connecting part 62c. In the present embodiment, the partition part 62d is formed to a disk shape. The maximum area surface where the area of the partition part 62d becomes largest is arranged to be substantially parallel to the surface of the top plate 62a. The partition part 62d is arranged between the fluid sealing member 63 and the fluid sealing member 69. The piston body 61 of the fourth piston has a holding chamber 61d. Inside the holding chamber 61d, the fluid sealing member 63, the partition part 62d of the covering member 62, and the fluid sealing member 69 are stacked in that order.

In the fourth piston of the present embodiment, when the temperature of the fluid at the inside of the fluid sealing member 63 rises, the temperature of the fluid at the inside of the fluid sealing member 69 also rises. For this reason, it is possible to keep the control pressure from ending up changing when the fluid sealing member 63 starts to contract due to a temperature change at the inside of the fluid sealing member 63.

In the fourth piston, two fluid sealing members are provided. In this way, the fluid spring may contain two or more fluid sealing members. When arranging a plurality of fluid sealing members, for example, it is possible to form them so that the volume of the fluid sealing member 63 and the volume of the fluid sealing member 69 differ. That is, it is possible to change the volume ratio relating to the plurality of fluid sealing members. Further, the types of the fluids which are sealed in the fluid sealing members may also be different from each other.

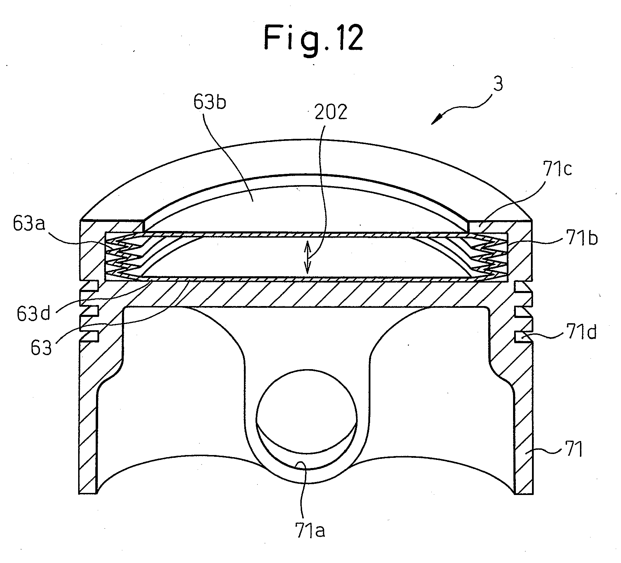

FIG. 12 is a cutaway perspective view of a fifth piston in the present embodiment. In the above-mentioned pistons, the fluid sealing member was covered by a covering member. The fifth piston of the present embodiment is formed so that part of the fluid spring is exposed to the combustion chamber. The piston body 71 of the fifth piston 3 has a hole part 71a into which the piston pin 81 is inserted. The piston body 71 has groove parts 71d in which piston rings or oil rings are arranged.

The piston body 71 has a recessed part 71b which is formed at the part which contacts the combustion chamber. The fluid sealing member 63 which forms the fluid spring is arranged in the recessed part 71b. The piston body 71 is open at the top part. The piston body 71 has a protruding part 71c which protrudes from the outer circumference toward the center at the top end part. The protruding part 71c can prevent the fluid sealing member 63 from jumping out from the recessed part 71b. The protruding part 71c functions as a stopping part which makes the operation of extension of the fluid sealing member 63 stop at a predetermined position. The fluid sealing member 63 has a top surface part 63b. Part of the top surface part 63b is exposed to the combustion chamber 5. Inside of the fluid sealing member 63, gas is sealed by a sealing pressure which corresponds to the control pressure.

The fluid sealing member 63 of the fifth piston extends and contracts in the direction which is shown by the arrow 202. The fluid sealing member 63 of the fifth piston contacts the combustion gas. The fluid sealing member 63 of the fifth piston can, for example, be formed from titanium or Inconel (registered trademark) 650 or other material which has heat resistance.

In the fifth piston of the present embodiment, the pressure of the combustion chamber 5 is directly transmitted to the fluid sealing member 63. If the pressure of the combustion chamber 5 reaches the control pressure, the fluid sealing member 63 contracts. In the fifth piston as well, the pressure of the combustion chamber 5 can be kept from becoming the control pressure or more. Further, the pressure of the combustion chamber 5 can be kept from reaching the pressure of occurrence of abnormal combustion.

The fluid sealing member 63 of the fifth piston is preferably formed so that the top surface part 63b which contacts the combustion chamber 5 does not deform. For example, the top surface part 63b is preferably formed by making the plate thickness sufficiently thick or formed by a hard material. Due to this configuration, the wall surfaces of the combustion chamber 5 can be kept from becoming rough. In the combustion chamber 5, the ratio (S/V) of the surface area (S) to the volume (V) can be kept from becoming greater. That is, deterioration of the S/V ratio can be prevented. It is possible to maintain the S/V ratio small and possible to reduce loss of heat energy.

Alternatively, the volume (crevice volume) of the clearance between the wall surfaces of the recessed part 71b of the piston body 71 and the fluid sealing member 63 can be kept from becoming greater. If the clearance between the wall surfaces of the recessed part 71b of the piston body 71 and the fluid sealing member 63 becomes greater, sometimes the unburned fuel will enter the clearance and accumulate there without burning. By keeping the crevice volume from increasing, accumulation of the unburned fuel can be suppressed.

The fluid sealing member 63 preferably has a rigidity of the top surface part 63b and the bottom surface part 63d greater than the rigidity of the side parts. Due to this configuration, the side parts can be made to deform preferentially. The top surface part 63b and the bottom surface part 63d can be kept from deforming and breaking. In the present embodiment, a bellows part 63a is formed at the side parts.

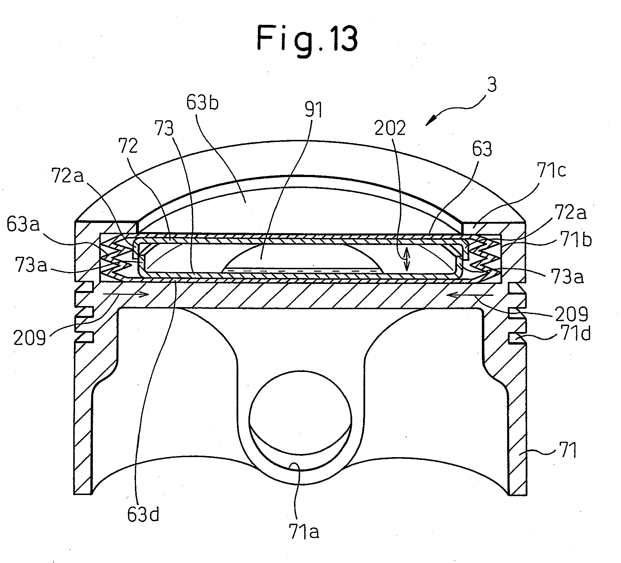

FIG. 13 is a cutaway perspective view of a sixth piston in the present embodiment. In the sixth piston 3, support members 72 and 73 are arranged at the inside of the fluid sealing member 63. The support member 72 has a side wall part 72a. The support member 73 has a side wall part 73a. The support members 72 and 73 are arranged so that the side wall parts 72a and 73a face each other.

The support member 72 is fastened to the top surface part 63b of the fluid sealing member 63. The support member 73 is fastened to the bottom surface part 63d of the fluid sealing member 63. The support members 72 and 73 are formed along the shape of the inside of the fluid sealing member 63. The side wall part 72a and the side wall part 73a are formed so as to fit with each other. The side wall part 72a and the side wall part 73a are formed to be able to slide with each other. Inside of the fluid sealing member 63, oil 91 is arranged. In this way, inside of the gas spring, support members which slide in the direction of extension and contraction of the gas spring are arranged.

When the pressure of the combustion chamber 5 rises and the fluid sealing member 63 contracts, sometimes combustion gas penetrates between the bellows part 63a and the wall surfaces of the recessed part 71b. As shown by the arrow 209, force heading toward the center is applied to the bellows part 63a. As a result, sometimes the fluid sealing member 63 ends up deforming toward the center. In the sixth piston of the present embodiment, the side wall parts 72a and 73a of the support members 72 and 73 support the bellows part 63a of the fluid sealing member 63 from the inside. The support members 72 and 73 can suppress deformation of the fluid sealing member 63. Furthermore, by fastening the support members 72 and 73 to the top surface part 63b and the bottom surface part 63d, the top surface part 63b and the bottom surface part 63d can be kept from deforming when the fluid sealing member 63 extends or contracts.

The oil 91 splatters at the inside of the fluid sealing member 63 along with reciprocating motion of the piston 3. The oil 91 is supplied to the parts where the support member 72 and the support member 73 slide. By arranging the oil 91 inside of the fluid sealing member 63, the support members 72 and 73 can be made to slide smoothly. Alternatively, the support member 72 and the support member 73 can be kept from seizing due to sliding. Note that, in the sixth piston, the fluid sealing member 63 is completely sealed, so can be continuously used without refilling oil.

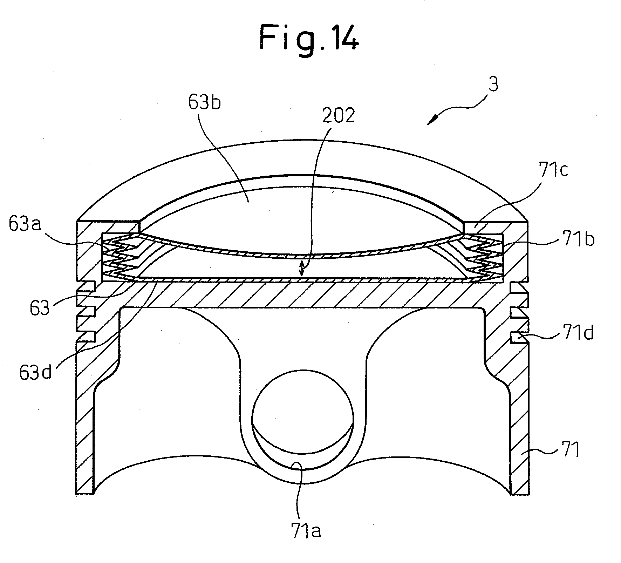

FIG. 14 is a cutaway perspective view of a seventh piston in the present embodiment. The fluid sealing member 63 in the seventh piston has a top surface part 63b which faces the combustion chamber 5 formed in a curved shape. The top surface part 63b is formed so that the center part is recessed. In the seventh piston in the present embodiment, the top surface part 63b is formed in a spherical shape. The fluid sealing member 63 extends and contracts in the direction which is shown by the arrow 202.

By forming the top surface part 63b of the fluid sealing member 63 in a curved shape so that the center part is recessed, the S/V ratio at the combustion chamber 5 can be reduced. That is, the ratio of the surface area to the volume can be reduced and the heat loss can be reduced. Furthermore, the top surface part 63b is preferably formed into a spherical shape. Due to this configuration, the S/V ratio can be reduced.

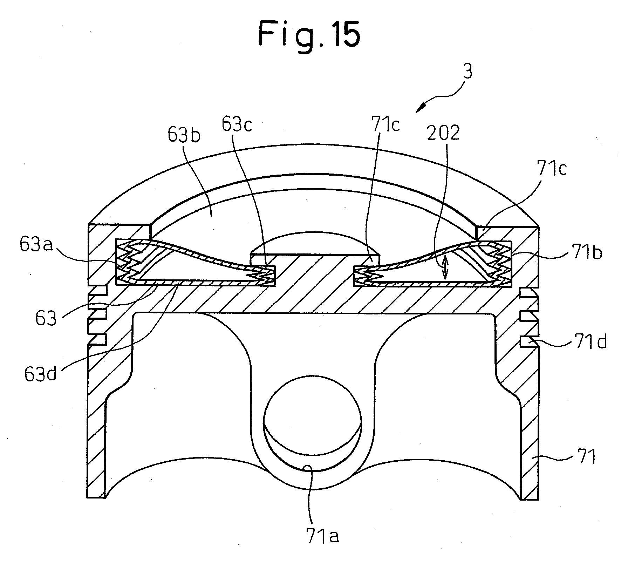

FIG. 15 is a cutaway perspective view of an eighth piston in the present embodiment. The fluid sealing member 63 of the eighth piston is formed with a ring shaped plan shape. That is, the fluid sealing member 63 has a donut shape when viewed by a plan view. The fluid sealing member 63 has a top surface part 63b which is formed into a curved shape. The fluid sealing member 63 has a bellows part 63a which is formed at the end part at the outside and a bellows part 63c which is formed at the end part at the inside. The piston body 71 has a protruding part 71c which is formed to correspond to the inside bellows part 63c.

At a piston which exposes part of a fluid sealing member to a combustion chamber 5, when the fluid sealing member 63 contracts, sometimes the center part of the top surface part 63b contacts the bottom surface part 63d. In particular, in the fluid sealing member 63 where the top surface part 63b is formed into a curved shape, sometimes the most recessed part of the top surface part 63b contacts the bottom surface part 63d. For this reason, sometimes the top surface part 63b or the bottom surface part 63d degrades or breaks. By forming the fluid sealing member 63 into a ring shape and forming a bellows part 63c as a deforming part at the inside end part, the top surface part 63b can be kept from contacting the bottom surface part 63d. For this reason, the fluid sealing member 63 can be kept from degrading or breaking.

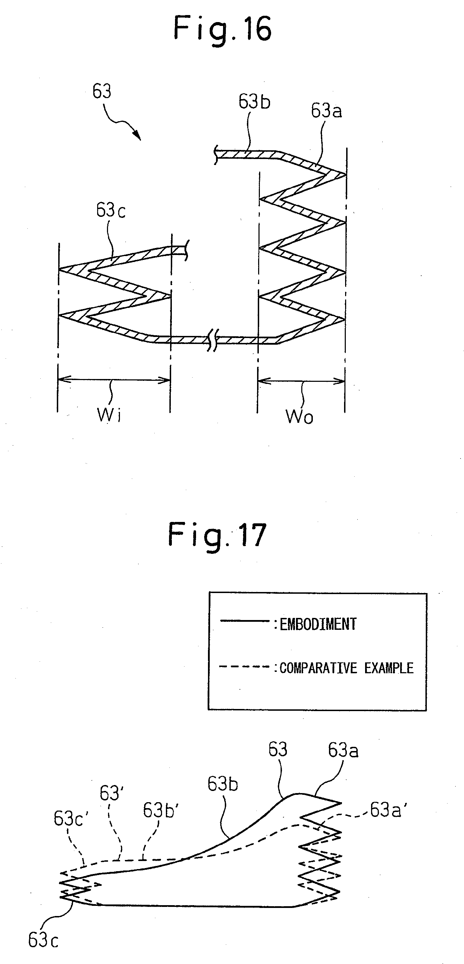

FIG. 16 is an enlarged schematic cross-sectional view of the outside bellows part and the inside bellows part of the fluid sealing member in the eighth piston of the present embodiment. When forming the fluid sealing member 63 into a ring shape, the spring constant of the inside bellows part 63c is preferably smaller than the spring constant of the outside bellows part 63a. The inside deformation part preferably deforms by a smaller pushing force than the outside deformation part. In the present embodiment, the inside bellows part 63c and the outside bellows part 63a are formed by the same material. The width Wi of the inside bellows part 63c is formed to be larger than the width Wo of the outside bellows part 63a.

FIG. 17 is a schematic cross-sectional view when the fluid sealing member of the eighth piston contracts in the present embodiment. The cross-section when the fluid sealing member 63 of the eighth piston contracts is shown by the solid line. A cross-section when the fluid sealing member 63' of the comparative example contracts is shown by the broken line. In the fluid sealing member 63 of the comparative example, the spring constant of the inside bellows part 63c' and the spring constant of the outside bellows part 63a' become substantially the same. When comparing the fluid sealing member 63 of the eighth piston and the fluid sealing member 63' of the comparative example, it is learned that the top surface part 63b of the fluid sealing member 63 of the eighth piston is closer to a semispherical shape than the top surface part 63b' of the comparative example.

In a ring-shaped fluid sealing member 63, the spring constant of the inside bellows part 63c can be made smaller than the spring constant of the outside bellows part 63a so as to make the inside part of the fluid sealing member 63 deform more than the outside part. When the fluid sealing member 63 deforms, the top surface part 63b can be made to approach a spherical shape. As a result, the S/V ratio in the combustion chamber can be reduced and the heat loss can be reduced. The spring constant can be made to change not only by changing the shape, but also by changing the material or thickness.

In the eighth piston of the present embodiment, when the operation of extension of the fluid sealing member 63 stops, the top surface part 63b becomes a curved shape, but the invention is not limited to this. The top surface part 63b may also be formed into a flat shape.

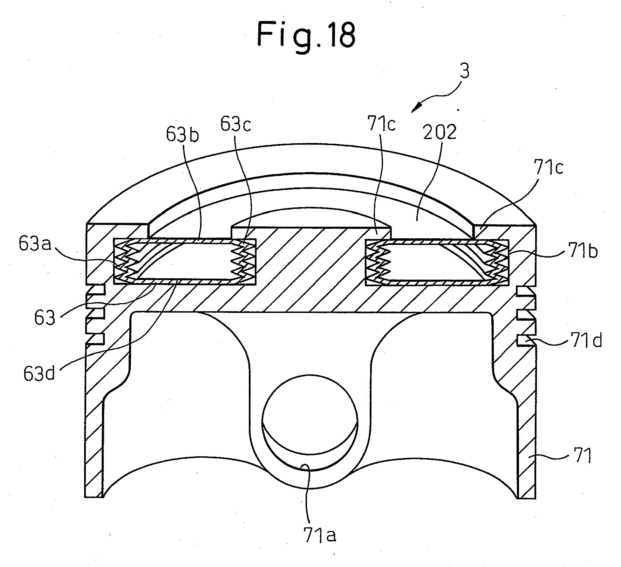

FIG. 18 is a cutaway perspective view of a ninth piston in the present embodiment. The fluid sealing member 63 of the ninth piston is formed to have a ring shaped plan shape. The top surface part 63b is formed to a flat shape. Further, the height of the inside bellows part 63c and the height of the outside bellows part 63a before the fluid sealing member 63 contracts are substantially the same. The cylinder body 71 has a protruding part 71c which is formed corresponding to the inside bellows part 63c. In the ninth piston as well, the top surface part 63b can be kept from contacting the bottom surface part 63d.

In the ninth piston of the present embodiment, the spring constant of the inside bellows part 63c is formed smaller than the spring constant of the outside bellows part 63a. For this reason, when the fluid sealing member 63 contracts, the inside bellows part 63c contracts more than the outside bellows part 63a. For this reason, when the fluid sealing member 63 contracts, the shape of the top surface part 63b can be made close to a spherical shape. The SV ratio of the combustion chamber can therefore be reduced.

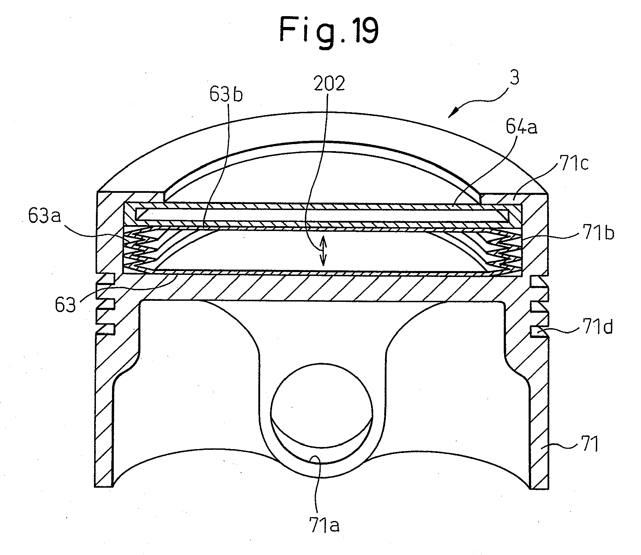

FIG. 19 is a cutaway perspective view of a tenth piston in the present embodiment. In the tenth piston 3, an interposing member 64a is arranged is arranged between the fluid sealing member 63 and the combustion chamber 5. The interposing member 64a is formed in a disk shape. The interposing member 64a is arranged at the recessed part 71b of the piston body 71. The interposing member 64a is formed so as not to fly out from the piston body due to contact with the protruding part 71c. The interposing member 64a in the present embodiment is formed by a hard material which will not deform even during the time period when the fluid sealing member 63 is extending or contracting. By arranging the interposing member 64a on the surface of the fluid sealing member 63, the top surface part 63b of the fluid sealing member 63 can be kept from deforming while causing the fluid sealing member 63 to extend and contract.

The interposing member 64a in the tenth piston of the present embodiment functions as a heat insulating member. In the example which is shown in FIG. 19, a cavity is formed inside of the interposing member 64a. The cavity is filled with air. In the same way as the second piston in the present embodiment, a heat insulating member may be arranged between the fluid sealing member 63 and the combustion chamber 5 to keep the temperature of the fluid at the inside of the fluid sealing member 63 from rising and keep the control pressure at which the fluid sealing member starts to contract from rising.

In the present embodiment, the control pressure is made less than the pressure at which abnormal combustion occurs, but the invention is not limited to this. The control pressure may also be made a pressure at which abnormal combustion is generated or more. For example, the control pressure may also be set to a pressure at which abnormal combustion occurs. Due to this configuration, the spread of abnormal combustion when abnormal combustion occurs can be suppressed.

In the present embodiment, as the fluid which is sealed in the fluid sealing member, a gas was explained as an example, but the invention is not limited to this. The fluid which is sealed at the inside of the fluid sealing member may also contain a liquid. For example, the fluid which is sealed inside of the fluid sealing member may also be a mixture of a liquid and a gas. The inside of the fluid sealing member may also contain a compressible fluid.

Further, the fluid spring in the present embodiment includes a fluid sealing member which has a bellows part, but the invention is not limited to this. The fluid spring need only contain a compressible fluid and be formed to be able to extend and contract by the desired pressure. For example, the fluid spring need not have a fluid sealing member and may have gas sealed in a space between the piston body and the covering member.


Embodiment 2

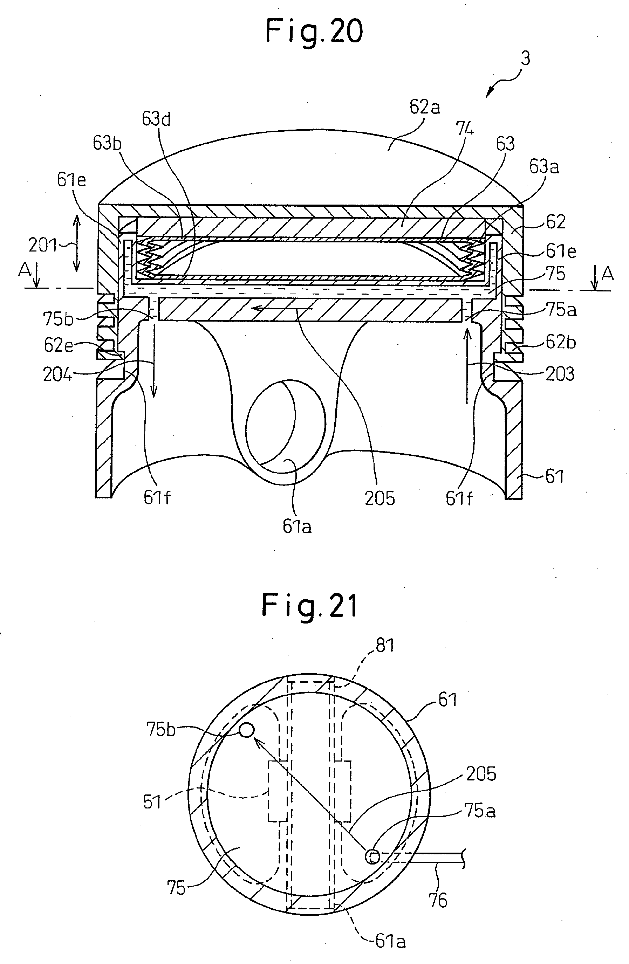

Referring to FIG. 20 to FIG. 37, a combustion pressure control system in an Embodiment 2 will be explained. The combustion pressure control system in the present embodiment is provided with a spring temperature adjustment device which adjusts a fluid temperature at the inside of a fluid spring which is arranged in the piston so as to adjust a pressure inside of the fluid spring.

FIG. 20 is a cutaway perspective view of a first piston in the present embodiment. The spring temperature adjustment device in the present embodiment includes a channel 75 at the inside of the piston 3 around the fluid spring through which the coolant flows. In the present embodiment, as the coolant, the lubrication oil of the engine body is used. At the first piston 3 of the present embodiment, the piston body 61 is formed with a channel 75. The channel 75 is formed along the bottom surface part 63d of the fluid sealing member 63.

The piston body 61 in the present embodiment has an outer wall part 61e. The outer wall part 61e is formed so as to surround the side surface part of the fluid sealing member 63. At the inside of the outer wall part 61e, the channel 75 extends. The channel 75 is formed along the side surface of the fluid sealing member 63.

Between the fluid sealing member 63 and the top plate 62a of the covering member 62, an interposing member 74 is arranged. The interposing member 74 in the present embodiment is formed to a disk shape. The interposing member 74 is formed so as to fit with the inside surface of the outer wall part 61e. The interposing member 74 is formed so as to be able to push against the fluid sealing member 63. The covering member 62 pushes against the fluid sealing member 63 through the interposing member 74.

FIG. 21 is a schematic cross-sectional view of the first piston in the present embodiment. FIG. 21 is a cross-sectional view along the line A-A in FIG. 20. Referring to FIG. 20 and FIG. 21, the channel 75 is formed so that the shape when viewed by a plan view becomes circular. The channel 75 has an inlet part 75a and an outlet part 75b. The inlet part 75a and the outlet part 75b form a communicating passage from the space at the inside of the piston body 61 toward the channel 75. The inlet part 75a and the outlet part 75b in the present embodiment are formed at positions avoiding the piston pin 81. The inlet part 75a and the outlet part 75b are arranged at the outer circumference of the channel 75.

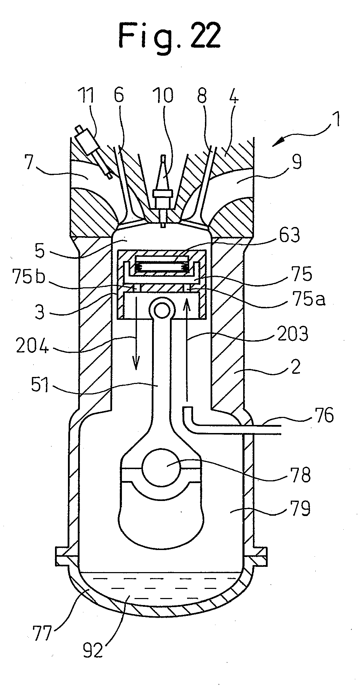

FIG. 22 is a schematic cross-sectional view of an engine body provided with the first piston in the present embodiment. The spring temperature adjustment device in the present embodiment includes a coolant feed device which supplies the coolant to the channel 75 which is formed in the piston 3. The coolant feed device has a nozzle 76. Referring to FIG. 21 and FIG. 22, the nozzle 76 is arranged avoiding positions which could obstruct motion of the piston 3 and the connecting rod 51. The nozzle 76 is arranged separated from the piston 3. The outlet of the nozzle 76 is directed toward the inlet part 75a of the channel 75. The nozzle 76 is formed so as to be able to spray the lubrication oil 92 in a straight line. The direction in which the lubrication oil 92 is sprayed is substantially parallel to the direction in which the piston 3 moves in a reciprocating manner. By the lubrication oil 92 being sprayed substantially parallel to the direction in which the piston 3 moves in a reciprocating manner, it is possible to supply the piston 3 with the lubrication oil 92 without obstructing the reciprocating motion of the piston 3.

Referring to FIG. 20 to FIG. 22, by the nozzle 76 spraying the lubrication oil 92, the lubrication oil 92 passes through the inlet part 75a and flows into the channel 75 as shown by the arrow 203. The lubrication oil 92 flows through the channel 75 as shown by the arrow 205. The lubrication oil 92 flows out from the outlet part 75b of the channel 75 as shown by the arrow 204.

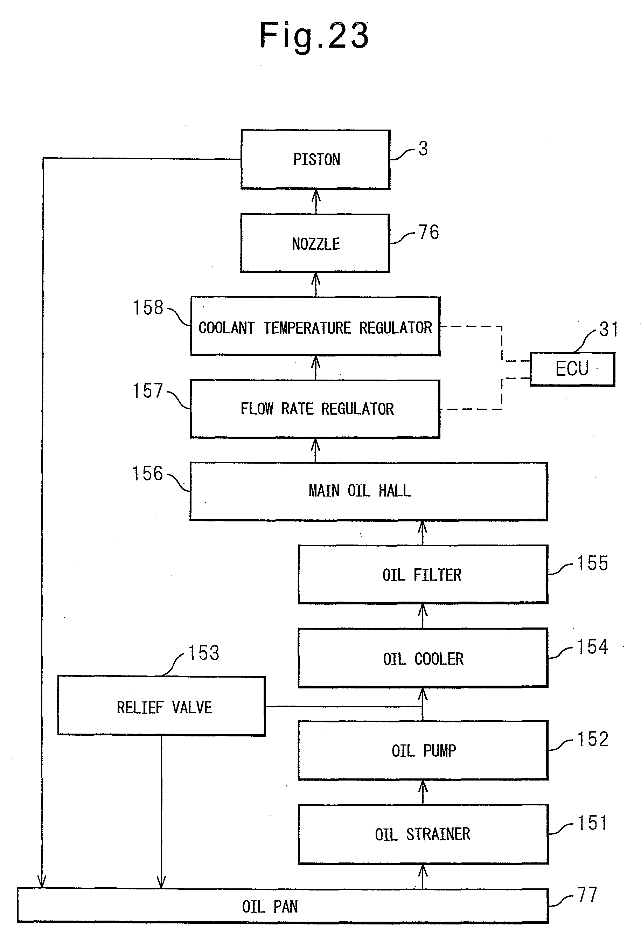

FIG. 23 is a system diagram of the lubrication oil feed system of the internal combustion engine in the present embodiment. The internal combustion engine in the present embodiment is provided with a lubrication oil feed system which supplies lubrication oil to the component parts which are arranged in the engine body 1. In the present embodiment, part of the lubrication oil feed system functions as a coolant feed device which supplies coolant to the inside of the piston.

The lubrication oil feed system is provided with an oil pan 77 as a storage member. The oil pan 77 stores the lubrication oil 92 (see FIG. 22). The lubrication oil feed system is provided with an oil pump 152. By driving the oil pump 152, the component parts of the engine body 1 are supplied with lubrication oil. The lubrication oil which leaks out from the clearances of the component parts drops down to the oil pan 77 due to the action of gravity. Between the oil pump 152 and the oil pan 77, an oil strainer 151 is arranged. The oil strainer 151 removes large foreign matter.

The outlet of the oil pump 152 is connected to a return channel which returns the lubrication oil to the oil pan 77. The return channel has a relief valve 153 arranged in it. The relief valve 153 is formed to return the lubrication oil to the oil pan 77 when the outlet pressure of the oil pump 152 exceeds an allowable value.

The outlet of the oil pump 152 is connected through an oil cooler 154 and an oil filter 155 to a main oil hall 156. The oil cooler 154 cools the lubrication oil. The oil filter 155 removes foreign matter which is contained in the lubrication oil. At the main oil hall 156, the lubrication oil is temporarily stored. The lubrication oil which is stored in the main oil hall 156 passes through the split channels and is supplied to the different component parts.

The coolant feed device in the present embodiment includes a coolant flow rate regulator 157 which adjusts the flow rate of the lubrication oil which flows through the channel 75 at the inside of the piston 3. The coolant flow rate regulator 157, for example, has a flow rate regulating valve. Further, the coolant flow rate regulator 157 may include an auxiliary oil pump which makes the pressure of the lubrication oil increase so as to spray high pressure lubrication oil from the nozzle 76.

The coolant feed device in the present embodiment is provided with a coolant temperature regulator 158 which adjusts the temperature of the lubrication oil which flows through the inside of the piston. The coolant temperature regulator 158, for example, includes at least one of a cooler and a heater. The coolant temperature regulator 158 enables the temperature of the lubrication oil used as a coolant to be adjusted.

The coolant flow rate regulator 157 and coolant temperature regulator 158 are respectively controlled by the electronic control unit 31. Either of the coolant flow rate regulator 157 or the coolant temperature regulator 158 may be arranged at the upstream side. The coolant feed device may be provided with at least one of the coolant flow rate regulator 157 and the coolant temperature regulator 158. The outlet of the coolant temperature regulator 158 is connected to the nozzle 76. The lubrication oil which is sprayed from the nozzle 76 flows into the inlet part 75a of the piston 3. By the lubrication oil passing through the inside of the piston 3, the temperature of the members around the fluid sealing member 63 can be made to change. As a result, the temperature of the inside of the fluid sealing member 63 can be adjusted. The lubrication oil passes through the inside of the piston 3 and flows out from the outlet part 75b. The lubrication oil which flows out from the piston 3 is returned to the oil pan 77.

The coolant feed device in the present embodiment includes a lubrication oil feed system, but the invention is not limited to this. It is also possible to arrange a coolant feed device which supplies coolant to the piston separate from the lubrication oil feed system which supplies lubrication oil to the engine body.

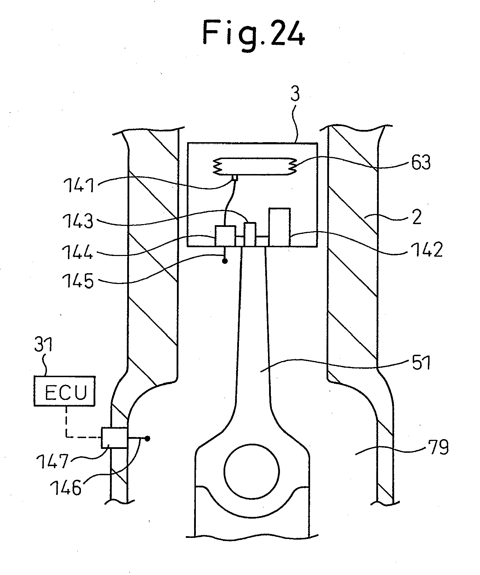

FIG. 24 is a schematic view of a pressure detection device which detects the pressure inside of the fluid spring of the piston in the present embodiment. The combustion pressure control system in the present embodiment is formed so as to be able to detect the pressure inside of the fluid spring. The pressure detection device is provided with a pressure sensor 141 which is arranged at the fluid sealing member 63. The pressure detection device is provided with an amplifier-oscillator 144 which is arranged at the inside of the piston 3. The amplifier-oscillator 144 is connected to the pressure sensor 141. The amplifier-oscillator 144 amplifies the signal of the pressure sensor 141 and emits an electric wave including the pressure signal through an antenna 145.

The amplifier-oscillator 144 has an accumulator 143 and a generator 142 connected to it to supply electric power. The accumulator 143 is formed so as to be able to store electric power. The accumulator 143, for example, includes a capacitor which can be charged and discharged. The generator 142, for example, is formed so as to be able to generate power by utilizing motion of the piston 3. The generator 142, for example, includes a coil and a magnet which moves in a reciprocating manner freely at the inside of the coil. This generator 142 generates power by the magnet moving in a reciprocating manner at the inside of the coil along with reciprocating motion of the piston 3.

The pressure detection device includes a receiver 147 which is fastened to the cylinder block 2. The receiver 147 includes an antenna 146. The receiver 147 is arranged at a position which does not obstruct the operation of the piston 3 and the connecting rod 51. The receiver 147, for example, is arranged at the crankcase 79. The receiver 147 is connected to the electronic control unit 31.

The pressure inside of the fluid sealing member 63 is detected by the pressure sensor 141. The pressure signal is amplified at the amplifier-oscillator 144, then is emitted from the antenna 145. The antenna 146 of the receiver 147 receives the pressure signal. The pressure signal which the receiver 147 receives is input to the electronic control unit 31. In this way, the present embodiment can detect the pressure inside of the fluid sealing member 63 during operation.

The internal combustion engine of the present embodiment can use the pressure detection device to detect the pressure of the fluid at the inside of the fluid spring and can use the spring temperature adjustment device to adjust the pressure inside of the fluid spring. For example, when the pressure inside of the fluid spring deviates from the desired range, the pressure inside of the fluid spring can be returned to a pressure inside of the desired range.

Referring to FIG. 20 to FIG. 23, for example, when the pressure inside of the fluid sealing member 63 rises and the control pressure becomes higher than the desired range, the flow rate of the lubrication oil which is supplied from the nozzle 76 may be increased to promote the heat removal around the channel 75. By increasing the flow rate of the lubrication oil which is supplied to the channel 75, the surroundings of the fluid sealing member 63 are cooled and the temperature of the fluid at the inside of the fluid sealing member 63 falls. As a result, the pressure inside of the fluid sealing member 63 can be lowered. Referring to FIG. 23, the flow rate of the lubrication oil which is supplied to the piston 3 can be adjusted by the coolant flow rate regulator 157.

Alternatively, when the pressure inside of the fluid sealing member 63 becomes higher than the desired range, control may be performed to lower the temperature of the lubrication oil which is supplied to the piston 3. By lowering the temperature of the lubrication oil which is supplied to the channel 75, the surroundings of the fluid sealing member 63 are cooled and the fluid temperature at the inside of the fluid sealing member 63 falls. As a result, the pressure inside of the fluid sealing member 63 can be lowered. Referring to FIG. 23, the temperature of the lubrication oil can be adjusted by the coolant temperature regulator 158.

When the pressure inside of the fluid sealing member 63 becomes less than the desired range, control may be performed to make the temperature of the fluid at the inside of the fluid sealing member 63 rise. In this case, the flow rate of the lubrication oil which is supplied to the channel 75 may be reduced so as to make the pressure inside of the fluid sealing member 63 rise. Alternatively, the temperature of the lubrication oil which is supplied to the channel 75 may be made to rise so as to make the pressure inside of the fluid sealing member 63 rise.

In this way, the combustion pressure control system in the present embodiment can adjust the temperature of the compressible fluid which is arranged at the inside of the fluid spring so as to adjust the pressure inside of the fluid spring. That is, the control pressure can be adjusted. Alternatively, the maximum pressure of the combustion chamber can be adjusted. For example, in the case of an internal combustion engine which operates by a substantially constant control pressure regardless of the operating state, when the control pressure deviates from the inside of the predetermined pressure range, the spring temperature adjustment device can be used to adjust the temperature at the inside of the fluid spring to return the control pressure to within the predetermined range of pressure.

In the combustion pressure control system which is provided with the first piston in the present embodiment, a coolant feed device which makes the flow rate of the coolant which is supplied to the piston or the temperature of the coolant change is used to adjust the pressure of the fluid at the inside of the fluid spring, but the invention is not limited to this. The spring temperature adjustment device need only be formed so as to enable adjustment of the temperature of the fluid which is filled inside of the fluid spring. For example, the spring temperature adjustment device may also include a device which blows air to the fluid sealing member so as to cool the fluid sealing member.

In this regard, the combustion pressure control system in the present embodiment is provided with an operating state detection device which detects an operating state of the internal combustion engine. The combustion pressure control system in the present embodiment is formed so as to be able to change the control pressure based on the operating state of the internal combustion engine which is detected. The pressure inside of the fluid sealing member 63 is changed based on the operating state at any time period. In this case, the spring temperature adjustment device may be used to adjust the pressure inside of the fluid sealing member 63.

Here, the operating state of the internal combustion engine for changing the control pressure will be explained with reference to the example of the engine speed. Referring to FIG. 1, the operating state detection device includes a crank angle sensor 42 for detecting the engine speed.

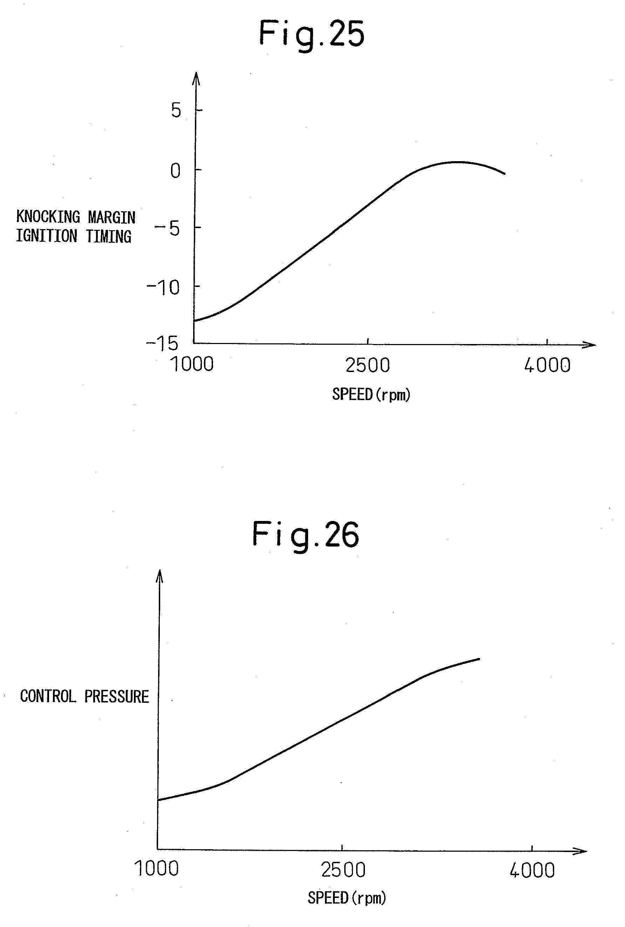

FIG. 25 is a graph which explains the relationship between the speed of an internal combustion engine of a comparative example and a knock margin ignition timing. The internal combustion engine of the comparative example is an internal combustion engine which does not have a fluid spring at the piston. The knock margin ignition timing can be expressed by the following formula:

$$\text{(Knock margin ignition timing)} = \text{(ignition timing at which knocking occurs)} - \text{(ignition timing at which output torque becomes maximum)}$$

The smaller the knock margin ignition timing in value, the easier it is for abnormal combustion to occur. The ease of occurrence of knocking differs depending on the speed of the internal combustion engine. For this reason, in the combustion pressure control system of the present embodiment, the speed of the internal combustion engine is used as the basis to change the control pressure. The internal combustion engine becomes resistant to abnormal combustion since generally if the speed of the internal combustion engine rises, the combustion period becomes shorter.

FIG. 26 is a graph of the control pressure against the speed of the internal combustion engine in the combustion pressure control system in the present embodiment. The higher the speed of the internal combustion engine, the higher the control pressure is set. Referring to FIG. 1, in the present embodiment, the value of the control pressure is stored as a function of the speed of the internal combustion engine in advance in the ROM 34 of the electronic control unit 31. The electronic control unit 31 uses the crank angle sensor 42 to detect the speed of the internal combustion engine and selects the control pressure in accordance with the speed. The electronic control unit 31 controls the spring temperature adjustment device so that the pressure inside of the fluid sealing member 63 becomes the sealing pressure corresponding to the selected control pressure.

Further, the operating state detection device in the present embodiment is provided with a fuel property detection device which detects a property of the fuel which is supplied to the combustion chamber. The detected property of the fuel is used as the basis to change the control pressure. The fuel of an internal combustion engine sometimes contains alcohol. In the present embodiment, an internal combustion engine which detects the alcohol concentration as the property of the fuel is explained as an example. The characteristics of the internal combustion engine at the time of operation depend on the alcohol concentration.

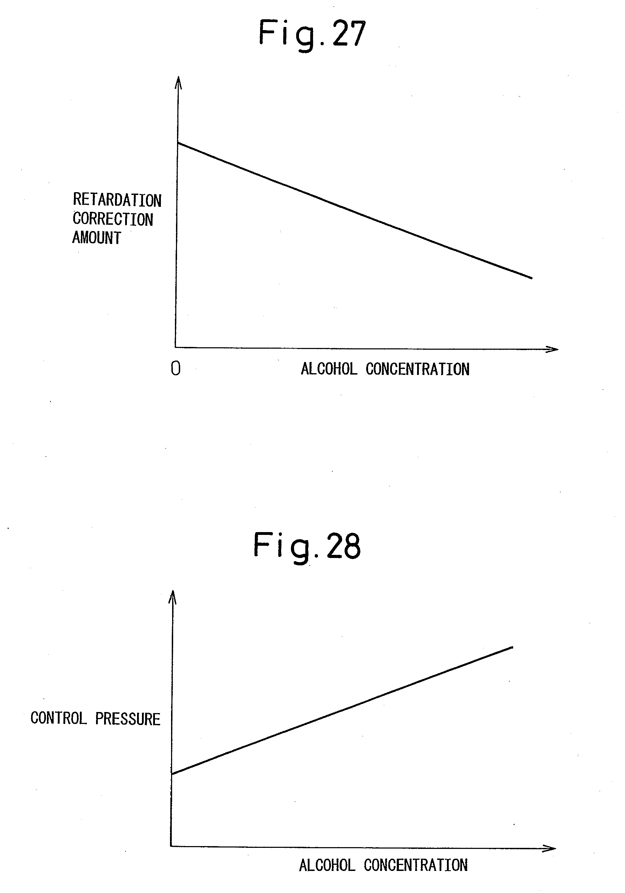

FIG. 27 shows a graph of the relationship between the alcohol concentration which is contained in the fuel and a retardation correction amount in an internal combustion engine of a comparative example. The internal combustion engine of the comparative example retards the ignition timing when abnormal combustion occurs. The abscissa in FIG. 27 indicates the alcohol concentration which is contained in the fuel, while the ordinate indicates the retardation correction amount when retarding the ignition timing so that abnormal combustion does not occur. The higher the alcohol concentration which is contained in the fuel, the smaller the retardation correction amount becomes. In this way, an internal combustion engine becomes more resistant to abnormal combustion the higher the alcohol concentration. For this reason, in the combustion pressure control system in the present embodiment, the alcohol concentration which is contained in the fuel is used as the basis to change the control pressure.

FIG. 28 is a graph of the control pressure with respect to the alcohol concentration in the combustion pressure control system in the present embodiment. The higher the alcohol concentration, the higher the control pressure is set. The fuel property detection device in the present embodiment includes an alcohol concentration sensor which detects the alcohol concentration which is contained in the fuel. Referring to FIG. 1, the internal combustion engine in the present embodiment has an alcohol concentration sensor arranged in the fuel feed channel as the fuel property sensor 177. The value of the control pressure is stored as a function of the alcohol concentration in advance in the ROM 34 of the electronic control unit 31. The electronic control unit 31 detects the alcohol concentration which is contained in the fuel and selects the control pressure in accordance with the alcohol concentration. The electronic control unit 31 controls the spring temperature adjustment device so that the pressure inside of the fluid sealing member 63 becomes the sealing pressure corresponding to the selected control pressure.

As the operating state of the internal combustion engine, in addition to the speed of the internal combustion engine and the property of the fuel which is supplied to the combustion chamber, the intake temperature, the cooling water temperature of the internal combustion engine, the temperature of the combustion chamber immediately before ignition, etc. may be illustrated. The lower these temperatures, the higher the control pressure can be set. For example, an internal combustion engine becomes more resistant to abnormal combustion the lower the temperature of the air-fuel mixture at the time of ignition. Furthermore, when the compression ratio of an internal combustion engine is variable, the lower the compression ratio, the lower the temperature at the time of ignition. For this reason, the lower the compression ratio, the higher the control pressure can be set.

Further, an internal combustion engine becomes more resistant to abnormal combustion the greater the ratio of the newly intaken air or recirculated gas or other working gas to the fuel. For this reason, as the operating state of the internal combustion engine, the intake air amount, recirculated gas flow rate, and air-fuel ratio at the time of combustion can be illustrated. The greater the ratio of the working gas with respect to the fuel, the higher the control pressure can be made.

Further, as the property of the fuel, in addition to the alcohol concentration, the octane value of gasoline or other indicators which show the knocking resistance can be illustrated. For example, it is possible to detect the supply of fuel with a high octane value or other fuel resistant to abnormal combustion to a combustion chamber and raise the control pressure.

By changing the control pressure in accordance with the operating state of the internal combustion engine in this way, abnormal combustion can be kept from occurring while increasing the maximum pressure of a combustion chamber. Abnormal combustion can be kept from occurring while increasing the output torque or suppressing fuel consumption in accordance with the operating state.

The pressure detection device which detects the pressure inside of the fluid sealing member is not limited to a pressure sensor. Any device can be used to detect the pressure inside of the fluid sealing member. For example, instead of a pressure sensor, a temperature sensor can be attached. By detecting the temperature inside of the fluid sealing member, the pressure inside of the fluid sealing member can be estimated. Alternatively, the operating state or a detection value which is detected at the time of operation can be used so as to estimate the pressure inside of the fluid sealing member.

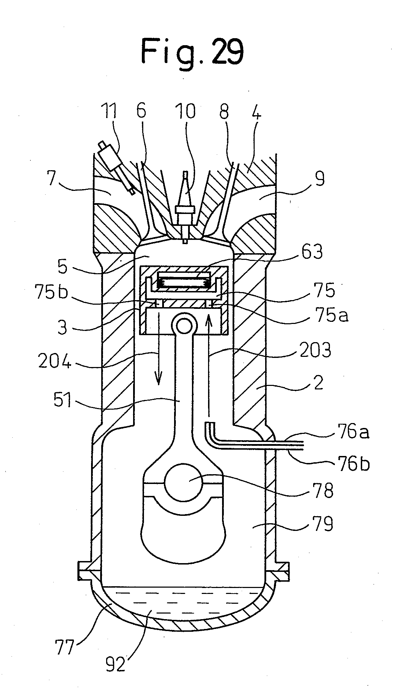

FIG. 29 is a schematic cross-sectional view of another engine body which is provided with the first piston in the present embodiment. The spring temperature adjustment device of the other engine body in the present embodiment includes a coolant feed device. The coolant feed device is formed so as to supply a mixture of a gas and liquid to the piston.

The coolant feed device of another engine body in the present embodiment includes an oil-use nozzle 76a which supplies lubrication oil as a liquid and an air-use nozzle 76b which supplies air. The ejection port of the oil-use nozzle 76a and the ejection port of the air-use nozzle 76b are arranged adjacent to each other. The oil-use nozzle 76a is connected to a device which supplies lubrication oil. The air-use nozzle 76b is, for example, formed to be connected to a compressor and to eject compressed air. In the present embodiment, the device which supplies the lubrication oil and the device which supplies the air are formed to enable independent control. By spraying lubrication oil from the oil-use nozzle 76a and spraying air from the air-use nozzle 76b, it is possible to supply the channel 75 at the inside of the piston 3 with a mixture of a liquid and a gas as the coolant.

In the case of a coolant feed device which supplies a coolant which contains a mixture of gas and liquid, it is possible to change the ratio of the gas and liquid so as to make the temperature of the fluid sealing member 63 change. The heat capacity of a liquid is generally larger than the heat capacity of a gas, so, for example, the ratio of the liquid to the gas can be increased so as to raise the cooling ability. As a result, the pressure inside of the fluid sealing member 63 can be lowered. Alternatively, when continuously supplying coolant and the fluid temperature at the inside of the fluid sealing member 63 becomes substantially constant, the ratio of the gas can be increased so as to make the pressure inside of the fluid sealing member 63 rise. In this way, the ratio of the gas and liquid can be changed so as to adjust the pressure inside of the fluid sealing member 63.

In the first piston of the present embodiment, one each of the inlet part and the outlet part are formed, but the invention is not limited to this. A plurality of the inlet parts and the outlet parts may also be formed. Further, when supplying a liquid and gas as the coolant, an inlet part of the liquid and an inlet part of the gas may also be formed.

The above coolant feed device sprays lubrication oil from nozzles which are separated from the piston so as to supply lubrication oil to the inside of the piston, but the invention is not limited to this. The coolant feed device may employ any configuration which supplies coolant to the inside of the piston.

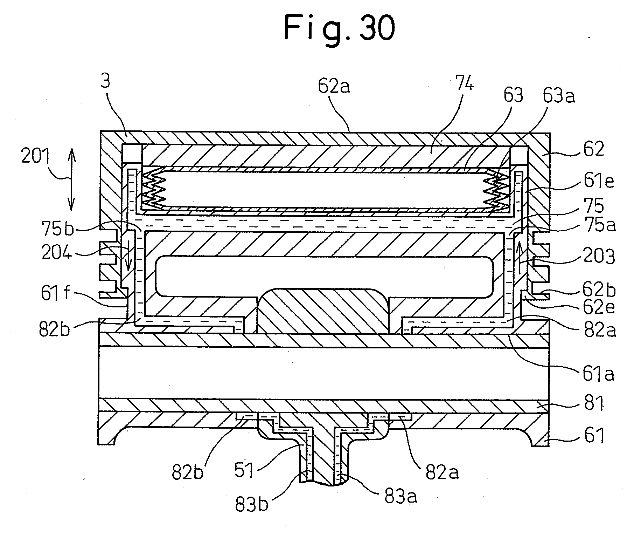

FIG. 30 is a schematic cross-sectional view of a second piston in the present embodiment. FIG. 30 is a schematic cross-sectional view when cutting the piston in the direction in which the piston pin is inserted. The coolant feed device which supplies coolant to the second piston 3 in the present embodiment supplies coolant to the piston through a channel at the inside of the crankshaft and a channel at the inside of the connecting rod.

The piston body 61 has a channel 75 inside it through which the coolant runs. The piston body 61 has a channel 82a which is connected to the inlet part 75a of the channel 75. The channel 82a passes through the inside of the piston body 61 and extends to the connecting part of the piston body 61 and the connecting rod 51. Further, the piston body 61 has a channel 82b which is connected to the outlet part 75b of the channel 75. The channel 82b passes through the inside of the piston body 61 and extends to the connecting part of the piston body 61 and the connecting rod 51.

At the inside of the connecting rod 51, a channel 83a is formed for supplying lubrication oil as the coolant. The channel 83a is communicated with the channel 82a of the piston body 61 at the connecting part of the piston body 61 and the connecting rod 51. Further, the inside of the connecting rod 51 is formed with a channel 83b for returning the lubrication oil. The channel 83b is communicated with the channel 82b of the piston body 61 at the connecting part of the piston body 61 and the connecting rod 51. The channel 83b, for example, is formed so as to release the lubrication oil to the crankcase 79. The channel 83b is formed so as to return the lubrication oil to the oil pan 77.

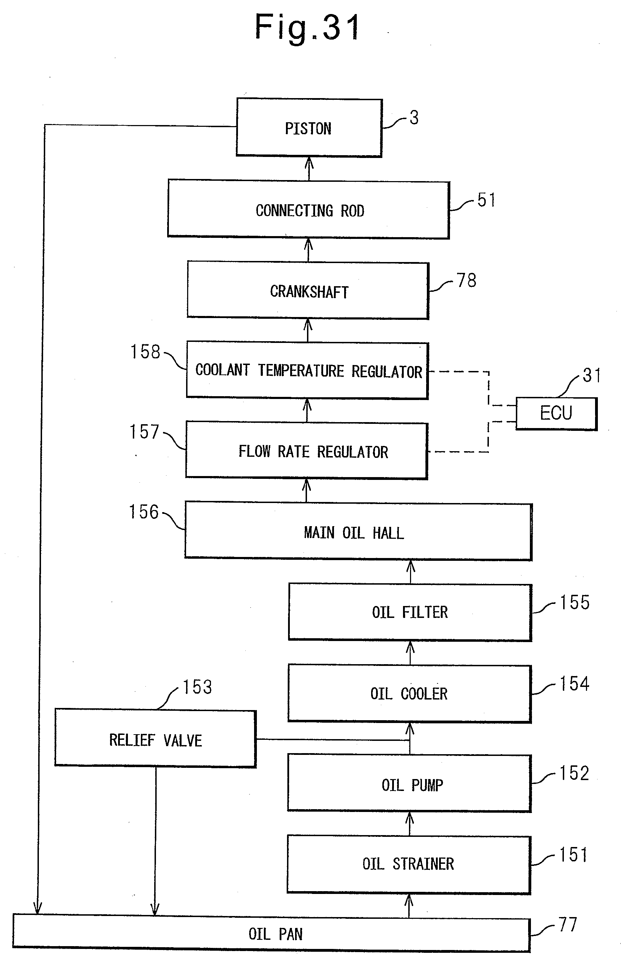

FIG. 31 is a system diagram of the lubrication oil feed system of an internal combustion engine which is provided with the second piston in the present embodiment. The lubrication oil which is stored in the oil pan 77 is supplied to the main oil hall 156 by driving the oil pump 152. The lubrication oil passes through the coolant flow rate regulator 157 and coolant temperature regulator 158 and is supplied to the crankshaft 78. For example, the lubrication oil is supplied from a crankshaft bearing to a channel at the inside of the crankshaft 7. The lubrication oil which passes through the inside of the crankshaft 78 is supplied through the connecting part of the crankshaft 78 and the connecting rod 51 to the channel 83a of the inside of the connecting rod 51.

Referring to FIG. 30 and FIG. 31, the lubrication oil which flows through the channel 83a of the connecting rod 51 flows into the channel 82a which is formed in the piston body 61. The lubrication oil which flows into the channel 82a, as shown by the arrow 203, flows into the channel 75. By the lubrication oil passing through the channel 75, the temperature of the members around the fluid sealing member 63 can be made to change. As a result, the temperature of the inside of the fluid sealing member 63 can be adjusted. The lubrication oil which flows out from the channel 75, as shown by the arrow 204, passes through the channel 82b which is formed in the piston body 61. After this, the lubrication oil is returned to the oil pan through the channel 83b which is formed in the connecting rod 51.

In this way, the coolant feed device can supply coolant to the inside of the piston through the inside of the connecting rod and other component parts. Further, in the present embodiment, as the coolant, lubrication oil of the engine body is employed, but the invention is not limited to this. Any fluid can be employed as the coolant. For example, as the coolant, an oil other than the lubrication oil of the engine body, water, air, engine cooling water, etc. may also be used. Alternatively, alcohol water or gasoline with a large latent heat of evaporation may also be used.

Referring to FIG. 30, when using a fluid other than lubrication oil of the engine body as a coolant, the inside of the connecting rod 51 is preferably formed with a channel 83a which supplies the coolant and a return channel 83b to recover the coolant. The return channel 83b is preferably connected through the crankshaft 78 etc. to a coolant recovery device. That is, it is preferable to supply coolant to the piston through a channel which is formed inside of the component parts of the engine body and recover the coolant through a return channel which is formed inside the component parts of the engine body.

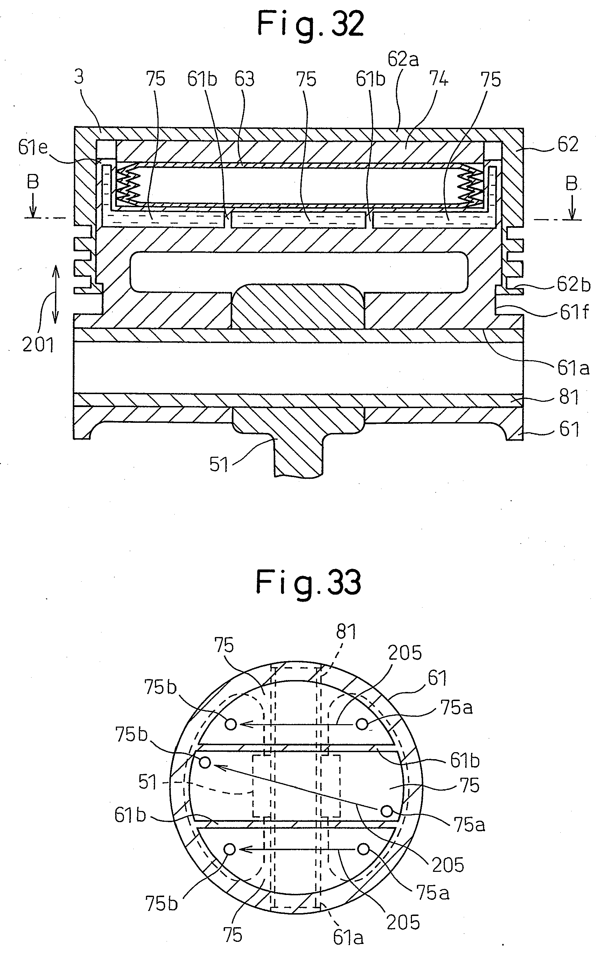

FIG. 32 is a schematic cross-sectional view of a third piston in the present embodiment. FIG. 32 is a schematic cross-sectional view when cut in the direction of extension of the piston pin. In the third piston 3, the channel which is formed around the fluid sealing member 63 is divided. That is, the third piston has a plurality of channels 75 which are formed at the piston body 61. In the example which is shown in FIG. 32, three channels 75 are formed. The piston body 61 has channel partition parts 61b which are formed between the channels 75.

FIG. 33 is another schematic cross-sectional view of the third piston in the present embodiment. FIG. 33 is cross-sectional view along the line B-B in FIG. 32. In the third piston of the present embodiment, the piston is provided with a channel 75 which passes through the center part which viewing the piston by a plan view and two channels 75 which pass through the side parts. The channels 75 are formed with coolant inlet parts 75a and outlet parts 75b. The coolant, as shown by the arrow 205, flows in from the inlet parts 75a and flows out from the outlet parts 75b.

The internal combustion engine which is provided with the third piston is formed so as to be able to supply lubrication oil independently to the channels 75. When using nozzles 76 which spray the lubrication oil so as to supply lubrication oil to the piston, a plurality of nozzles 76 are arranged so as to be able to supply lubrication oil to the inlet parts 75a of the channels 75. In the internal combustion engine which is provided with the third piston, three nozzles 76 can be used to supply lubrication oil to the channels 75. In the respective channels 75, the lubrication oil flows from the inlet parts 75a toward the outlet parts 75b, whereby it is possible to change the temperature of the members around the fluid sealing member 63. It is therefore possible to adjust the temperature of the inside of the fluid sealing member 63.

In the third piston of the present embodiment, a plurality of independent coolant channels are formed. By employing this configuration, the channel through which the coolant runs can be selected in accordance with the requested pressure inside of the fluid sealing member 63. For example, when lowering the pressure inside of the fluid sealing member 63 by lowering the temperature of the inside of the fluid sealing member 63, the number of the channels 75 which supply the coolant can be increased. By increasing the number of the channels 75 through which the coolant runs, the ability to cool the fluid sealing member 63 can be improved. For example, it is possible to change the number of the channels 75 through which the coolant runs from one to three.

Further, the heat which is stored at the piston 3 is released through the piston ring. For this reason, in the piston, the temperature of the center part when viewed by a plan view becomes higher than the temperature of the peripheral parts. When forming a plurality of channels at the piston, by adjusting the temperature or flow rate of the coolant of the channel which passes through the center part when viewed by a plan view, the pressure inside of the fluid sealing member can be effectively adjusted. For example, by increasing the flow rate of the coolant of the channel which passes through the center part when viewed by a plan view and improving the cooling ability, the pressure inside of the fluid sealing member can be reduced in a short time.

In the example which is shown in FIG. 33, among the three channels 75, the center channel 75 passes through the center part when viewing the piston 3 by a plan view. For example, by adjusting the flow rate of the center channel 75, the pressure inside of the fluid sealing member 63 can be adjusted in a short time. In this way, in the piston, by adjusting the flow rate of the coolant or the temperature of the coolant which is supplied to the channel which passes through the high temperature location where the temperature becomes relatively high, the pressure inside of the fluid sealing member can be effectively adjusted. Alternatively, when the coolant is a mixture of a liquid and a gas, by adjusting the liquid ratio of the coolant which is supplied to the channel which runs through the high temperature location, the pressure of the fluid sealing member can be effectively adjusted.

Further, when forming a plurality of channels at the inside of the piston, by adjusting the temperature or flow rate of the coolant which runs through the large area channel where the fluid sealing member and the channel face each other, the pressure inside of the fluid sealing member can be adjusted in a short time. For example, when projecting the fluid sealing member on the plurality of channels, they are classified into channels with large projection areas and channels with small projection areas. By adjusting the temperature or flow rate of the coolant which is supplied to the channel with the large projection area, the pressure inside of the fluid sealing member can be effectively adjusted. Alternatively, when supplying a mixture of a gas and liquid as the coolant, by adjusting the ratio of liquid in the channel with a large projection area of the fluid sealing member, the pressure inside of the fluid sealing member can be effectively adjusted.

In the example which is shown in FIG. 32 and FIG. 33, three channels are formed so that the partitions of the channels become straight, but the invention is not limited to this. The channels can be formed by any shapes. Further, any number of channels can be formed.

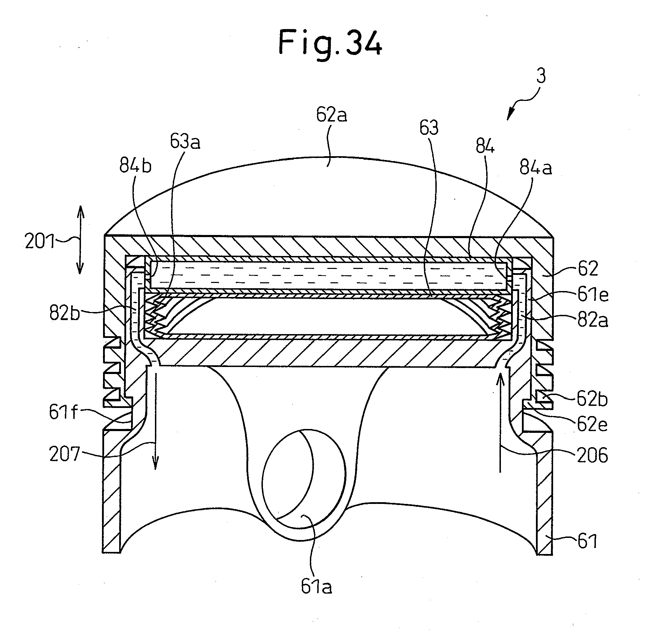

FIG. 34 is a cutaway perspective view of a fourth piston in the present embodiment. The internal combustion engine which is provided with the fourth piston is provided with a spring temperature adjustment device which adjusts the temperature of the fluid at the inside of the fluid sealing member 63. The spring temperature adjustment device includes a channel through which coolant runs between the fluid sealing member 63 and the combustion chamber 5.

The fourth piston in the present embodiment includes a channel forming member 84. The channel forming member 84 in the present embodiment is formed into a disk shape. The channel forming member 84 is arranged at the surface of the fluid sealing member 63. The channel forming member 84 is formed inside it with a cavity which forms a channel. The channel forming member 84 has an inlet part 84a into which the coolant flows and an outlet part 84b out from which the coolant flows.

The piston body 61 has an outer wall part 61e. The fluid sealing member 63 is arranged at the inside of the outer wall part 61e. The outer wall part 61e is formed with a channel 82a into which the coolant flows and a channel 82b out from which the coolant flows. At the top part of the outer wall part 61e, there is an opening part at which the channel 82a opens at the inside surface of the outer wall part 61e. At the top part of the outer wall part 61e, there is an opening part at which the channel 82b opens at the inside surface of the outer wall part 61e.

The channel forming member 84 is formed so as to fit with the inside surface of the outer wall part 61e. The channel forming member 84 is formed so as to move in a reciprocating manner inside of the recessed part which is surrounded by the outer wall part 61e.

The covering member 62 is formed so as to cover the channel forming member 84 and fluid sealing member 63. The covering member 62 is pushed by the pressure of the combustion chamber 5. The covering member 62 pushes the fluid sealing member 63 through the channel forming member 84.

The inlet part 84a of the channel forming member 84 is formed so as to connect to the channel 82a. The outlet part 84b of the channel forming member 84 is formed so as to connect to the channel 82b. In the present embodiment, the opening part of the channel 82a is formed so that the inlet part 84a moves to the inside of the opening when the fluid sealing member 63 extends and contracts. Further, the opening of the channel 82b is formed so that the outlet part 84b moves at the inside of the region of the opening when the fluid sealing member 63 extends and contracts. In the fourth piston of the present embodiment, during the operating period, coolant can be run to the channel forming member 84 while the fluid sealing member 63 extends and contracts. By the flow of the coolant through the inside of the channel forming member 84, the temperature of the channel forming member 84 can be changed. Further, the temperature of the inside of the fluid sealing member 63 can be adjusted.

As the coolant which is supplied to the channel forming member 84, the lubrication oil 92 of the engine body can be employed. The lubrication oil 92, as shown in the arrow 206, is supplied to the channel 82a which is formed at the piston body 61. The lubrication oil 92 passes through the channel 82a and flows into the channel forming member 84. The lubrication oil 92 which flows out from the channel forming member 84, as shown by the arrow 207, passes through the channel 82b which is formed at the piston body 61 and is returned to the oil pan 77.

In the fourth piston of the present embodiment as well, by adjusting at least one of the flow rate and temperature of the coolant which flows through the inside of the channel forming member 84, the temperature of the inside of the fluid sealing member 63 can be adjusted. The pressure inside of the fluid sealing member 63 can be adjusted. Further, in the fourth piston, it is possible to form a channel between a combustion chamber and fluid spring and use the channel forming member 84 as a heat insulating member.

In this regard, in the fourth piston, by reducing the flow rate of the coolant of the channel at the inside of the channel forming member 84, the disturbance of the fluid at the inside of the channel forming member 84 becomes smaller. The heat conduction between the coolant and the channel forming member 84 deteriorates. For this reason, the amount of heat which is conducted from the combustion gas of the combustion chamber to the fluid sealing member 63 can be reduced. As a result, the temperature of the fluid at the inside of the fluid sealing member 63 can be lowered.

In the fourth piston, by reducing the flow rate of the lubrication oil which is supplied to the channel forming member 84, the pressure inside of the fluid sealing member 63 can be lowered. Alternatively, by increasing the flow rate of the lubrication oil which is supplied to the channel forming member 84, the pressure inside of the fluid sealing member 63 can be raised.

When adjusting the temperature of the coolant which is supplied to the channel forming member 84, for example, the temperature of the coolant can be lowered so as to lower the temperature of the inside of the fluid sealing member 63. The pressure inside of the fluid sealing member 63 can therefore be lowered.

When supplying a mixture of a gas and a liquid as a coolant, the ratio of gas and liquid can be adjusted so as to adjust the pressure inside of the fluid sealing member 63. A liquid generally has a higher thermal conductivity than a gas. For this reason, by, for example, reducing the ratio of liquid to increase the ratio of gas, the heat conduction can be degraded. As a result, the temperature of the inside of the fluid sealing member 63 can be lowered. The pressure inside of the fluid sealing member 63 can be lowered.

In the fourth piston of the present embodiment, in the same way as the third piston of the present embodiment, a plurality of channels can be formed inside of the channel forming member 84. For example, partitions can be formed to form a plurality of channels at the inside of the channel forming member 84. A plurality of channels can be formed at the outer wall part 61e of the piston body 61 so as to independently supply coolant to the channels of the channel forming member 84.

When forming a plurality of channels in the channel forming member 84, if adjusting the pressure inside of the fluid sealing member 63, the number of channels which carry the coolant can be changed. For example, by reducing the number of channels which supplies coolant in the plurality of channels, the pressure inside of the fluid sealing member 63 can be reduced.

Alternatively, by adjusting the flow rate of the coolant which runs through the high temperature location, the pressure inside of the fluid spring can be effectively adjusted. For example, by reducing the flow rate of the coolant of the channel which passes through the high temperature location of the piston, the pressure inside of the fluid sealing member 63 can be lowered. When a mixture of a liquid and other liquid is supplied as a coolant, by adjusting the liquid ratio of the coolant which is supplied to the channel which passes through the high temperature location, the pressure inside of the fluid spring can be effectively adjusted. For example, by reducing the liquid ratio of the coolant which is supplied to the channel which passes through the high temperature location, the pressure inside of the fluid sealing member 63 can be reduced in a short time.

Alternatively, by adjusting the flow rate of the coolant of the large area channel where the channel of the fluid sealing member 63 and the channel forming member 84 face each other, the pressure inside of the fluid spring can be effectively adjusted. For example, by reducing the flow rate of the coolant of the channel with a large area facing the fluid sealing member 63, the pressure inside of the fluid sealing member 63 can be reduced in a short time. Alternatively, when a mixture of a gas and liquid is supplied as the coolant, by adjusting the liquid ratio in the coolant which flows through the large area channel which faces the fluid sealing member 63, the pressure inside of the fluid spring can be effectively adjusted. For example, by reducing the liquid ratio of the coolant which flows through the large area channel which faces the fluid sealing member 63, the pressure inside of the fluid sealing member 63 can be reduced in a short time.

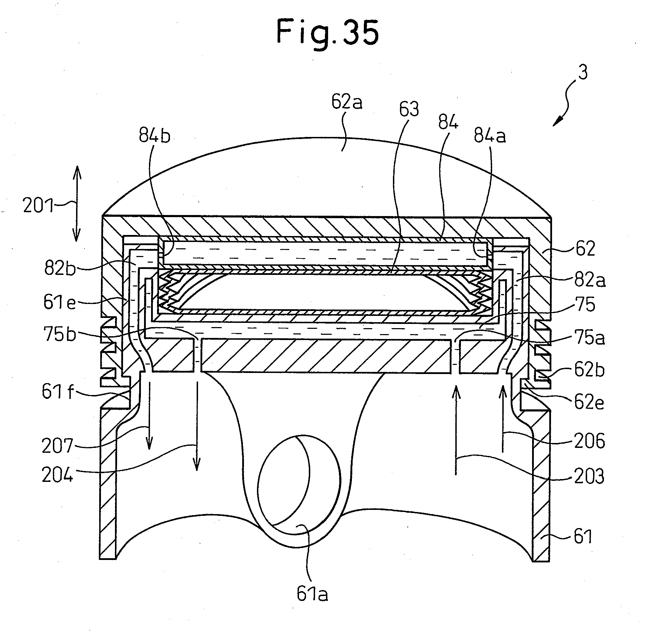

FIG. 35 is a cutaway perspective view of a fifth piston in the present embodiment. In the fifth piston of the present embodiment, a channel is formed for running coolant between the fluid sealing member 63 which forms the fluid spring and the combustion chamber 5. Furthermore, a channel 75 is formed for running coolant in the fluid sealing member 63 at the opposite side from the side facing the combustion chamber 5. At the fifth piston, a channel for running coolant at the first piston of the present embodiment and a channel for running coolant at the fourth piston of the present embodiment are formed.

The channel through which the fluid runs at the inside of the channel forming member 84 functions as the first channel. Further, the channel 75 which is formed at the inside of the piston body 61 functions as a second channel. The combustion pressure control system which is provided with the fifth piston is provided with coolant feed devices which supply coolant at the first channel and the second channel. For example, it is provided with a first nozzle for supplying lubrication oil to the inside of the channel forming member 84 and a second nozzle for supplying lubrication oil to the channel 75. The fifth piston of the present embodiment is formed so as to enable the flow rates of the coolant or the temperature of the coolant which runs through the channels to be independently adjusted. By adjusting at least one of the flow rate and temperature of the lubrication oil which is sprayed from the nozzles, the pressure inside of the fluid sealing member 63 can be adjusted.

Here, in the present embodiment, when making the pressure inside of the fluid sealing member 63 rise, it is preferable to increase the amount of heat conduction in the channel at the inside of the channel forming member 84. For example, the flow rate of the lubrication oil which is supplied to the channel forming member 84 is made to increase. When the coolant which is supplied to the channel forming member 84 includes a liquid and gas, it is preferable to increase the liquid ratio. In this case, the flow rate and temperature of the lubrication oil which is supplied to the channel 75 need not be changed.

The channel forming member 84 has the function of inhibiting conduction of the heat of the combustion gas in the combustion chamber 5 to the fluid sealing member 63. For this reason, when adjusting the flow rate or temperature of the coolant which flows through the channel forming member 84, the time for lowering the temperature of the inside of the fluid sealing member 63 becomes longer, while the time for raising the temperature of the inside of the fluid sealing member 63 becomes shorter. Due to the reduction of the heat insulating performance of the channel forming member 84, the pressure inside of the fluid sealing member 63 can be made to rise in a short time.

On the other hand, when making the pressure inside of the fluid sealing member 63 fall, it is preferable to make the amount of heat removal of the coolant in the channel 75 which is formed around the fluid sealing member 63 at the opposite side from the combustion chamber 5 increase. For example, the flow rate of the lubrication oil which flows through the channel 75 is made greater. When the coolant which is supplied to the channel 75 contains a liquid and gas, it is preferable to increase the liquid ratio. In this case, the flow rate and temperature of coolant which is supplied to the channel forming member 84 need not be changed.

The channel 75 is superior in the function of cooling the fluid inside of the fluid sealing member 63. For this reason, when adjusting the flow rate or temperature of the coolant which flows through the channel 75, the time for raising the temperature of the inside of the fluid sealing member 63 becomes longer, but the time for lowering the temperature of the inside of the fluid sealing member 63 becomes shorter. For this reason, when lowering the pressure of the fluid inside of the fluid sealing member 63, the heat removal ability of the channel 75 can be raised so as to make the pressure inside of the fluid sealing member 63 fall in a short time.

Next, a combustion pressure control system in which a pressure detection device which detects the pressure inside of the fluid sealing member is not arranged but which can adjust the flow rate of coolant in accordance with the temperature inside of the fluid sealing member will be explained.

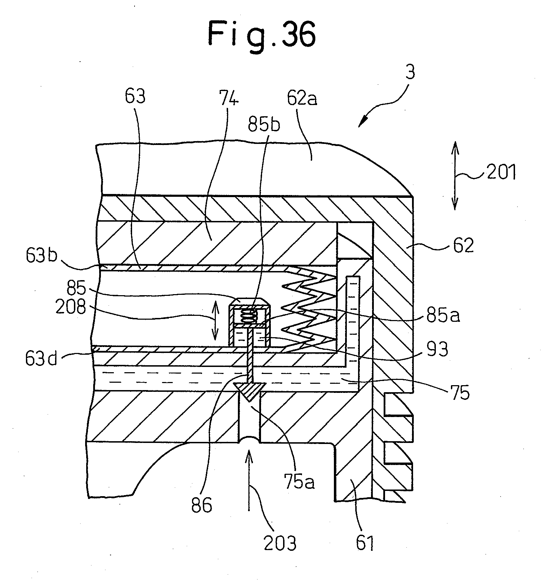

FIG. 36 is an enlarged cutaway perspective view of a sixth piston in the present embodiment. The sixth piston 3 is suitable for an internal combustion engine wherein the pressure inside of the fluid sealing member 63, that is, the control pressure, is substantially constant over the operating period. The sixth piston is provided with a cylinder 85 at the inside of the fluid sealing member 63. The cylinder 85 is fastened to the bottom surface part 63d of the fluid sealing member 63.

The cylinder 85 has a movement member 85a at the inside. The movement member 85a is formed in a plate shape. The movement member 85a is arranged to move in the direction which is shown by the arrow 208. Inside of the cylinder 85, wax 93 is filled in one space at the side facing the inlet part 75a of the channel 75 among the spaces defined by the movement member 85a. At the other space inside of the cylinder 85, a biasing member 85b is arranged which biases the movement member 85a. The wax 93 is formed to expand by the rise of the temperature. The biasing member 85b is formed so as to bias the movement member 85a toward the inlet part 75a of the channel 75.

The movement member 85a is connected to the closing member 86. The closing member 86 is formed in a rod shape. The closing member 86 is arranged to extend toward the inlet part 75a of the channel 75. The closing member 86 is formed to close the inlet part 75a when the front end part contacts the inlet part 75a. The closing member 86 is biased toward the inlet part 75a. The closing member 86 functions as a cutoff valve of the inlet part 75a.

In the sixth piston of the present embodiment, when the temperature of the inside of the fluid sealing member 63 is less than the valve opening temperature, the closing member 86 closes the inlet part 75a of the channel 75. That is, inflow of the coolant is prevented. If the temperature of the inside of the fluid sealing member 63 rises, the wax 93 expands. If the temperature of the inside of the fluid sealing member 63 becomes the valve opening temperature or more, due to the expansion of the wax 93, the movement member 85a moves against the biasing force of the biasing member 85b. The valve opening temperature of the valve mechanism can be set based on the pressure inside of the fluid sealing member 63. For example, it may be set based on the sealing pressure of the fluid sealing member 63 corresponding to the control pressure.

In the example which is shown in FIG. 36, the movement member 85a moves upward. The closing member 86 moves together with the movement member 85a. As a result, the inlet part 75a of the channel 75 is opened. By the inlet part 75a of the channel 75 being opened, coolant flows into the channel 75. By the coolant flowing to the channel 75, the inside of the fluid sealing member 63 is cooled and the pressure inside of the fluid sealing member 63 can be lowered. If the temperature of the inside of the fluid sealing member 63 falls, the volume of the wax 93 is reduced. When the temperature at the inside of the fluid sealing member 63 becomes less than the valve opening temperature, the inlet part 75a is closed by the closing member 86.

In the sixth piston of the present embodiment, the valve mechanism which opens and closes the channel through which the coolant flows is mechanically driven based on the temperature of the inside of the fluid sealing member 63. When the pressure inside of the fluid sealing member 63 rises, the channel opens and coolant flows, whereby the pressure falls. By employing this configuration, the pressure inside of the fluid spring can be maintained within the desired range by a simple configuration.

When a plurality of channels are formed which supply coolant, the respective channels may be provided with valve mechanisms which can open and close based on the temperature. They may be formed so as to enable the flow rate of the coolant which is supplied to the channels to be adjusted. Alternatively, when the inlet part to which the gas flows and the inlet part to which the liquid flows are formed independently at the inlet of the channel, valve mechanisms may be arranged which can open and close based on the temperature at the respective inlet parts. Due to this configuration, the ratio between the gas and liquid which flow into the channel can be adjusted.

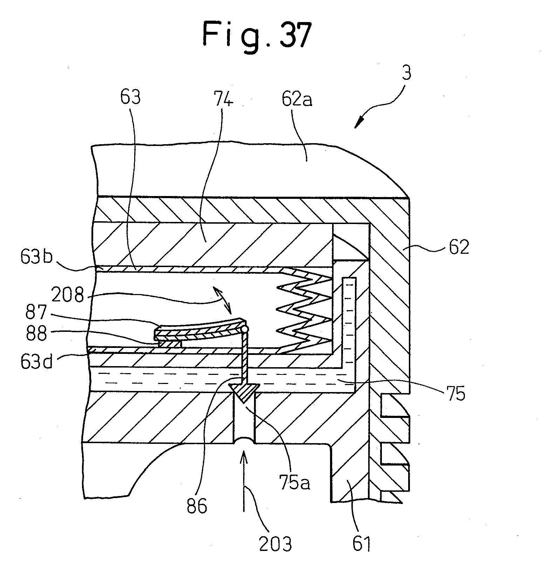

FIG. 37 is an enlarged cutaway perspective view of a seventh piston in the present embodiment. The seventh piston is provided with a valve mechanism which opens and closes the inlet part 75a of the channel 75. The valve mechanism of the seventh piston includes the bimetal member 87. The bimetal member 87 in the present embodiment is formed in a plate shape. The bimetal member 87 includes two plate members of metals with mutually different heat expansion rates. The bimetal member 87 is fastened to a fastening table 88. The fastening table 88 is fastened to the bottom surface part 63d of the fluid sealing member 63.

The front end part of the bimetal member 87 has a closing member 86 connected to it. The bimetal member 87, as shown by the arrow 208, is formed so that the front end part moves in the vertical direction based on the temperature of the inside of the fluid sealing member 63. The bimetal member 87 is formed so as to make the closing member 86 move when the temperature of the inside of the fluid sealing member 63 rises and becomes the valve opening temperature or more. Due to movement of the closing member 86, the inlet part 75a is opened. The bimetal member 87 returns to the original shape when the temperature of the inside of the fluid sealing member 63 falls. When the temperature of the inside of the fluid sealing member 63 becomes less than the valve opening temperature, the closing member 86 closes the inlet part 75a.

The bimetal member 87 in the present embodiment lifts up the closing member 86 when the pressure inside of the fluid sealing member 63 becomes larger than a predetermined pressure range. In this way, the valve mechanism which is driven based on the temperature inside of the fluid sealing member may include a bimetal member.

The valve mechanism of the sixth piston and the valve mechanism of the seventh piston of the present embodiment are formed so that the inlet part 75a of the channel 75 which cools the fluid sealing member 63 can be opened and closed, but the invention is not limited to this. The outlet part 75b may also be formed to open and close. Alternatively, the valve mechanism may also be formed to shut the middle of the channel 75. Furthermore, the valve mechanism may be formed to change the opening degree of the valve so as to enable the flow rate of the coolant of the channel 75 to be adjusted.

In the sixth piston and the seventh piston of the present embodiment, a channel is formed around the fluid sealing member 63 at the side opposite to the side facing the combustion chamber, but the invention is not limited to this. It is also possible to arrange a valve mechanism which can open and close based on the temperature inside of the fluid sealing member in a piston around the fluid sealing member 63 where a channel is formed at the side facing the combustion chamber.

In the present embodiment, a piston which is provided with a piston body 61 and a covering member 62 was explained as an example, but the invention is not limited to this. The spring temperature adjustment device etc. of the present embodiment can also be applied to a piston which does not have a covering member, but is comprised of a piston body in which grooves of piston rings are formed (see FIG. 12 to FIG. 19). When forming a channel carrying a coolant between the combustion chamber and the fluid spring, for example, it is possible to arrange an interposing member 64a between the fluid sealing member 63 and the combustion chamber 5 (see FIG. 19) and form a channel at the inside of the interposing member 64a.

The rest of the configuration, actions, and effects are similar to those of Embodiment 1, so the explanations will not be repeated here.

Embodiment 3

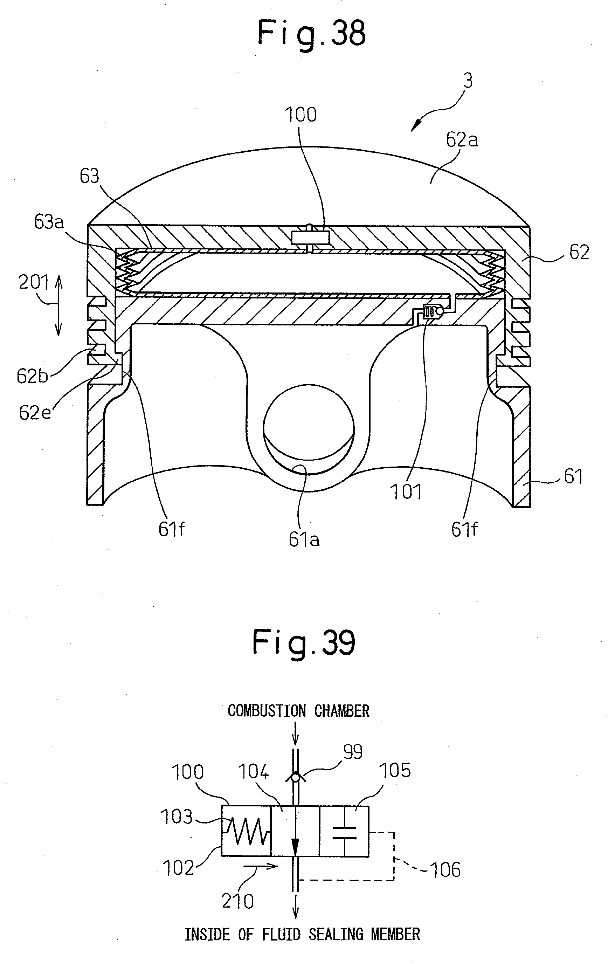

Referring to FIG. 38 to FIG. 42, a combustion pressure control system in an Embodiment 3 will be explained. The combustion pressure control system in the present embodiment includes an air charging device which supplies air to the inside of the fluid spring which is arranged at the piston. Further, the combustion pressure control system includes an air exhaust device which releases the air from the inside of the fluid spring when the pressure becomes larger than a predetermined level.

FIG. 38 is a cutaway perspective view of a first piston in the present embodiment. The first piston 3 in the present embodiment includes a fluid sealing member 63 and a covering member 62 which is formed so as to cover the fluid sealing member 63. The air charging device includes a direction control valve 100. The air exhaust device includes a check valve 101.

The direction control valve 100 is arranged between the combustion chamber 5 and the fluid sealing member 63. The direction control valve 100 in the present embodiment is arranged at the inside of a top plate 62a of the covering member 62. The check valve 101 is arranged between the fluid sealing member 63 and the crankcase 79. The check valve 101 in the present embodiment is arranged at the inside of the piston body 61.

FIG. 39 is a schematic view of the direction control valve which is arranged at the first piston of the present embodiment. The direction control valve 100 is connected to the combustion chamber 5 at one channel and is connected to the inside of the fluid sealing member 63 at the other channel. In the middle of the channel which connects the direction control valve 100 and the combustion chamber 5, a check valve 99 is arranged. The check valve 99 is arranged so as to prevent the inflow of air from the direction control valve 100 to the combustion chamber 5. The check valve 99 is formed so as to open by a slight pressure difference.

The direction control valve 100 is provided with a housing 102. Inside of the housing 102, a connecting member 104 and a cutoff member 105 are arranged. The connecting member 104 has a channel which communicates the channel which flows into the direction control valve 100 and the channel which flows out from it. The cutoff member 105 shuts the channel. The connecting member 104 and the cutoff member 105 are formed to be able to move inside of the housing 102. The connecting member 104 and the cutoff member 105 are arranged adjacent to each other. The connecting member 104 and cutoff member 105 are pressed by the biasing member 103 in the direction which is shown by the arrow 210. The biasing member 103 is formed so that when the pressure inside of the fluid sealing member 63 becomes a predetermined pressure, the connecting member 104 and cutoff member 105 move against the biasing force.

The direction control valve 100 uses the biasing force of the biasing member 103 to connect the channel which is communicated with the combustion chamber 5 and the channel which is communicated with the inside of the fluid sealing member 63 to connect the connecting member 104. When the pressure of the combustion chamber 5 becomes higher than the pressure inside of the fluid sealing member 63, gas is supplied from the combustion chamber 5 to the inside of the fluid sealing member 63. The pressure inside of the fluid sealing member 63 can be made to rise.

When the pressure inside of the fluid sealing member 63 rises and becomes a predetermined pressure or more, as shown by the broken line 106, the pressure inside of the fluid sealing member 63 is used to press the cutoff member 105. The connecting member 104 and cutoff member 105 move in opposite directions to the direction of the arrow 210 against the biasing force of the biasing member 103. The cutoff member 105 is connected to the channel which is communicated with the combustion chamber 5 and the channel which is communicated with the inside of the fluid sealing member 63. As a result, the inside of the fluid sealing member 63 is cut off from the combustion chamber 5.

In this way, the direction control valve 100 can utilize the pressure of the combustion gas in the combustion chamber 5 to make the pressure inside of the fluid sealing member 63 rise to a predetermined pressure when the pressure inside of the fluid sealing member 63 is lower than a predetermined pressure. The predetermined pressure in this case can, for example, employ the sealing pressure of the fluid sealing member 63 corresponding to the control pressure.

Referring to FIG. 38, the first piston in the present embodiment has a channel which communicates the inside of the fluid sealing member 63 and the crankcase 79. In the middle of the channel, a check valve 101 is arranged. The check valve 101 is formed so as to circulate gas when the pressure inside of the fluid sealing member 63 becomes higher than the predetermined pressure. When the pressure inside of the fluid sealing member 63 becomes higher than the predetermined pressure, the gas can be released into the crankcase so as to make the pressure fall to the predetermined pressure.

In this way, in the first piston, when the pressure inside of the fluid sealing member 63 is lower than the desired pressure range, the air is filled, while when the pressure inside of the fluid sealing member 63 is higher than the desired pressure range, the air is released. Regardless of the operating state of the internal combustion engine, the ambient temperature, etc., the pressure inside of the fluid sealing member 63 can be maintained with the desired pressure range.

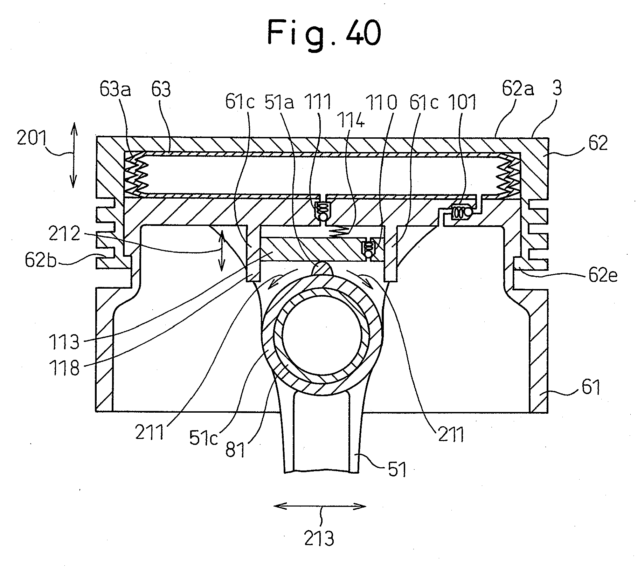

FIG. 40 is a schematic cross-sectional view of the second piston and the connecting rod in the present embodiment. The air charging device in the second piston is provided with an air pump which supplies air to the inside of the fluid sealing member 63.

The air pump of the second piston in the present embodiment is provided with a cylinder 118. The cylinder 118 includes a wall part 61c which is formed at a back surface of the piston body 61. The wall part 61c is formed so as surround the area around the region where the connecting rod 51 is arranged. The cylinder 118 includes a movement member 113. The movement member 113 is formed so as to fit with the inside of the wall part 61c. The movement member 113 in the present embodiment is formed to a disk shape. The movement member 113 is biased by the biasing member 114 to the side facing the connecting rod 51.

The connecting rod 51 which is connected to the second piston has a projecting part 51a. The projecting part 51a is formed with a small end part 51c of the connecting rod 51. The projecting part 51a is formed so as to enable the movement member 113 to be repeatedly pushed by swinging of the connecting rod 51.

At the inside of the movement member 113, a channel is formed which communicates the space which is surrounded by the movement member 113 and the piston body 61 with the crankcase 79. In this channel, a check valve 110 is arranged. The check valve 110 is arranged so as to prevent the flow of air from the space which is surrounded by the movement member 113 and the piston body 61 to the crankcase 79. The check valve 110 is formed so as to open by a slight pressure difference.

At the top part of the piston body 61, a channel is formed which communicates the inside of the fluid sealing member 63 and the space which is surrounded by the movement member 113 and the piston body 61. In this channel, a check valve 111 is arranged. The check valve 111 prevents the flow of air from the inside of the fluid sealing member 63 to the space which is surrounded by the movement member 113 and the piston body 61. The check valve 111 is formed so as to open by a slight pressure difference. Further, the second piston has arranged at the piston body 61 a check valve 101 which releases the air to the crankcase when the pressure inside of the fluid sealing member 63 becomes larger than a predetermined pressure.

By the internal combustion engine being driven and the piston 3 moving in a reciprocating manner, the connecting rod 51 swings as shown by the arrow 213. The projecting part 51a of the connecting rod 51, as shown by the arrow 211, moves in a reciprocating manner in the lateral direction. The movement member 113 is pushed by the projecting part 51a whereby it moves in a reciprocating manner as shown by the arrow 212. When the movement member 113 moves toward the fluid sealing member 63, the check valve 111 opens. Air is supplied to the inside of the fluid sealing member 63. When the movement member 113 moves in a direction away from the fluid sealing member 63, the check valve 110 opens. Air flows into the space which is surrounded by the movement member 113 and the piston body 61. When the pressure inside of the fluid sealing member 63 becomes higher than a predetermined pressure, the check valve 101 opens and the pressure can be made to fall.

In the second piston of the present embodiment, an air pump is arranged between the piston body 61 and the connecting rod 51. In the second piston, the air pump uses swinging movement of the connecting rod 51 as a driving source so as to supply air to the inside of the fluid sealing member 63.

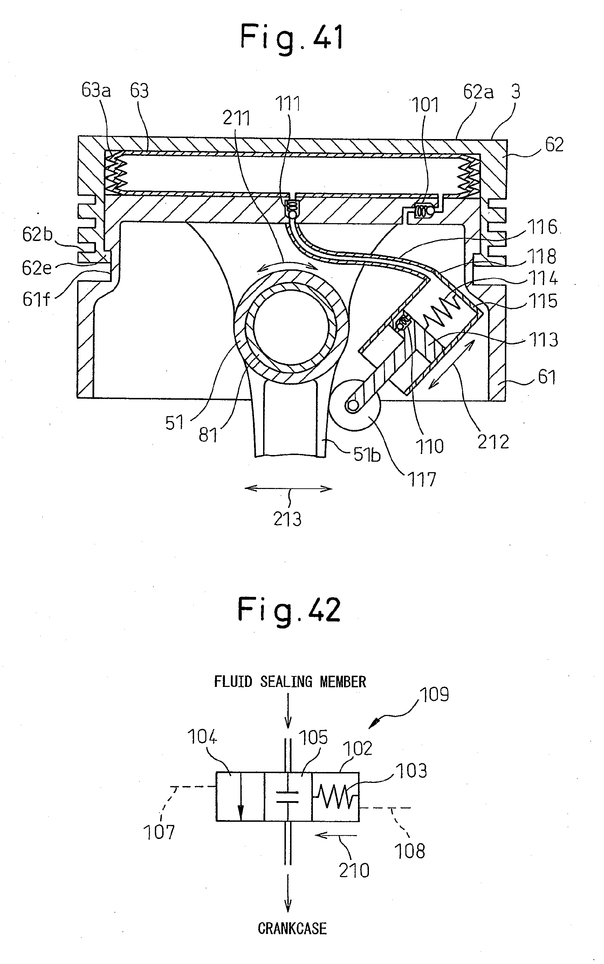

FIG. 41 is a schematic cross-sectional view of a third piston in the present embodiment. In the third piston as well, the air charging device is provided with an air pump. The air pump in the third piston is provided with a cylinder 118. The cylinder 118 includes a container 115. Inside of the container 115, a movement member 113 is arranged. The movement member 113 is biased by a biasing member 114 in a direction facing the connecting rod 51. Inside of the movement member 113, a check valve 110 is arranged for preventing backflow of air. The movement member 113 is formed into a T-shaped cross-sectional shape. The cylinder 118 is connected through a pipe 116 to the inside of the fluid sealing member 63. Inside the channel which connects the cylinder 118 and the inside of the fluid sealing member 63, a check valve 111 is arranged for preventing backflow.

The cylinder 118 is arranged at the side of the connecting rod 51. The connecting rod 51 has a rod-shaped part 51b which is formed into a rod shape. The cylinder 118 includes a roller 117 which is connected to the movement member 113. The roller 117 is supported in a rotatable manner. The roller 117 is arranged so as to contact the rod-shaped part 51b of the connecting rod 51.

Due to operation of the internal combustion engine, the rod-shaped part 51b moves as shown by the arrow 213. The movement member 113 is pushed by swinging of the rod-shaped part 51b. The movement member 113, as shown by the arrow 212, moves in a reciprocating manner inside of the container 115. When the movement member 113 moves against the biasing force of the biasing member 114, the cylinder 118 compresses the air. The compressed air passes through the pipe 116 and check valve 111 and is filled inside of the fluid sealing member 63. When the movement member 113 moves toward the connecting rod 51, the check valve 110 opens and air flows inside of the cylinder 118.

In the third piston of the present embodiment, the air pump can supply air to the inside of the fluid sealing member 63 as the source for driving swinging of the connecting rod 51. When the pressure inside of the fluid sealing member 63 becomes higher than a predetermined pressure range, the check valve 101 opens and air can be released to the inside of the crankcase 79.

In the second piston and third piston of the present embodiment as well, regardless of the operating state of the internal combustion engine, ambient temperature, etc., the pressure inside of the fluid sealing member 63 can be maintained within the desired pressure range.

The piston of the present embodiment described above is formed to open the check valve 101 and release air when the pressure inside of the fluid sealing member 63 becomes higher than a predetermined pressure, but the invention is not limited to this. Instead of the check valve 101, a valve which can be controlled in opening and closing operation may be arranged. For example, a direction control valve is arranged which can be opened and closed by oil pressure.

FIG. 42 is a schematic view of a direction control valve for releasing air from the fluid sealing member in the present embodiment. The direction control valve 109 functions as an air exhaust device. The direction control valve 109 can be arranged instead of the check valve 101 which is arranged at the first piston, second piston, or third piston of the present embodiment. The one channel which is connected to the direction control valve 109 is connected to the inside of the fluid sealing member 63, while the other channel is connected to the crankcase 79.

The direction control valve 109 includes a connecting member 104 which communicates the channel and a cutoff member 105 which shuts the channel. The connecting member 104 and the cutoff member 105 are arranged at the inside of the housing 102. The biasing member 103 pushes the cutoff member 105 in the direction which is shown by the arrow 210. Due to the biasing force of the biasing member 103, the channel which is communicated with the fluid sealing member 63 and the channel which is communicated with the crankcase 79 are connected by the cutoff member 105. In this case, the channel is shut.

The direction control valve 109 is controlled by the oil pressure. The direction control valve 109, as shown by the broken line 107, is connected to an oil feed channel which supplies the oil. By supplying the oil of the predetermined oil pressure to the direction control valve 109, the connecting member 104 and cutoff member 105 move against the biasing force of the biasing member 103. As a result, the channel which is communicated with the fluid sealing member 63 and the channel which is communicated with the crankcase 79 are connected by the connecting member 104 whereby the channel is opened. The oil which is supplied to the direction control valve 109, as shown by the broken line 108, is exhausted as drainage, for example. The oil which is exhausted as drainage is, for example, trapped at the oil pan 77.

The oil which controls the direction control valve 109 can be supplied through the inside of the component parts of the engine body. For example, the oil for control can be supplied through the channel which is formed at the inside of the crankshaft, the channel which is formed at the inside of the connecting rod, and the channel which is formed at the inside of the piston body.

By employing the direction control valve 109, it is possible to open and close the direction control valve at any timing. For example, it is possible to release the air at the inside of the fluid sealing member 63 to the crankcase 79 at the desired timing. For this reason, it is possible to adjust the pressure inside of the fluid sealing member 63 in any way. When the pressure inside of the fluid sealing member 63 becomes higher than the desired pressure range, it is possible to supply high pressure oil to the direction control valve 109 so as to make the pressure inside of the fluid sealing member 63 fall.

In the present embodiment, a piston which is provided with a piston body 61 and a covering member 62 was explained as an example, but the invention is not limited to this. The air charging device and air exhaust device etc. of the present embodiment can also be applied to a piston which does not have a covering member, but is comprised of a piston body in which grooves of piston rings are formed (see FIG. 12 to FIG. 19). When arranging a direction control valve between the fluid sealing member and the combustion chamber, for example, it is also possible to arrange an interposing member 64a between the fluid sealing member 65 and the combustion chamber 5 (see FIG. 19) and arrange the direction control valve inside of the interposing member 64a.

The rest of the configuration, actions, and effects are similar to those of the Embodiment 1 or 2, so the explanations will not be repeated here.

Embodiment 4

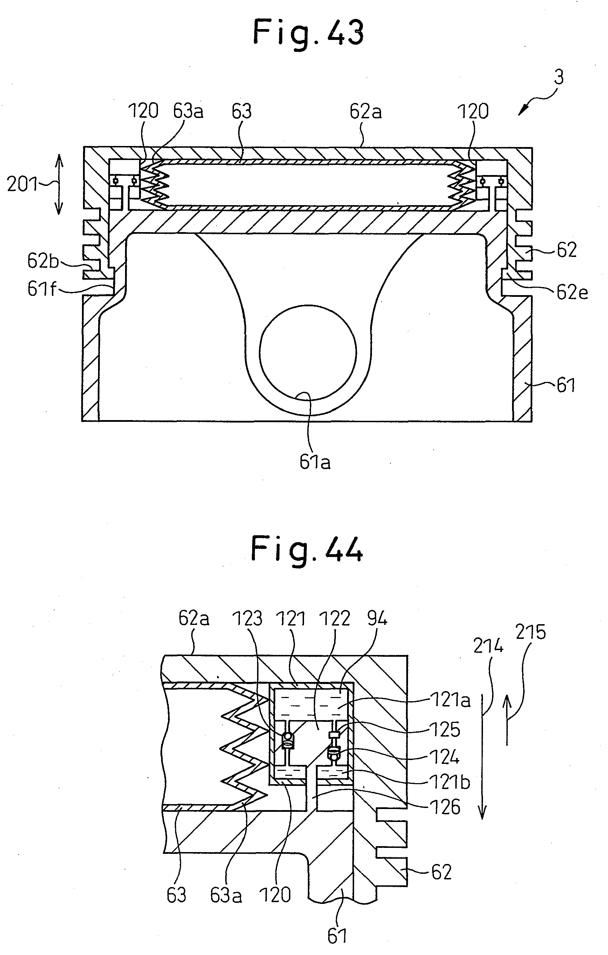

Referring to FIG. 43 and FIG. 44, a combustion pressure control system in an Embodiment 4 will be explained. The combustion pressure control system in the present embodiment is provided with a speed reducing device which reduces the speed by which the fluid spring extends.

FIG. 43 is a schematic cross-sectional view of the piston in the present embodiment. The piston 3 in the present embodiment includes a piston body 61 and a covering member 62. At the side of the fluid sealing member 63, a speed reducing device is arranged. The speed reducing device of the present embodiment includes a cylinder 120. The cylinder 120 is arranged at the inside of the covering member 62.

FIG. 44 is an enlarged schematic cross-sectional view of the speed reducing device of the piston in the present embodiment. The cylinder 120 is provided with a container 121. The container 121 is fastened to the covering member 62. The container 121 moves together with the covering member 62. The inside of the container 121 is filled with oil 94. Inside of the container 121, a movement member 122 is arranged. The movement member 122 is formed so as to move in a reciprocating manner inside of the container 121. The movement member 122 is formed so as to divide the inside of the container 121 into two spaces. Inside of the container 121, the first oil chamber 121a and the second oil chamber 121b are formed.

The movement member 122 is fastened through a connecting member 126 to the piston body 61. The movement member 122 is formed with two channels which connect the first oil chamber 121a and the second oil chamber 121b. In one channel, a check valve 123 is arranged. The check valve 123 prevents oil from flowing from the second oil chamber 121b to the first oil chamber 121a. In the other channel, a check valve 124 is arranged. The check valve 124 is arranged so as to prevent the flow of oil from the first oil chamber 121a to the second oil chamber 121b. At the other channel in which the check valve 124 is arranged, an orifice 125 is arranged which limits the flow rate.

In this regard, when the fluid sealing member 63 contracts, it preferably contracts at a high speed so as to enable a rise in pressure of the combustion gas to be suppressed in a short time. On the other hand, when the fluid sealing member 63 extends, the action of the stopping part is used to stop the operation of extension of the fluid sealing member 63. Referring to FIG. 43, when the fluid sealing member 63 extends, the stopping part 62e of the covering member 62 contacts the wall surface of the recessed part 61f of the piston body 61, whereby it is possible to stop the operation of extension of the fluid sealing member 63. At this time, the stopping part 62e and the wall surface of the recessed part 61f collide, so noise or vibration sometimes occurs. For this reason, when the fluid sealing member 63 extends, it preferably extends at a low speed.

Referring to FIG. 44, in the piston of the present embodiment, when the pressure of the combustion chamber becomes a control pressure or more, the fluid sealing member 63 contracts, whereby, as shown by the arrow 214, the covering member 62 moves toward the piston body 1. The oil 94 passes through the check valve 123 and flows from the first oil chamber 121a to the second oil chamber 121b. In this case, the fluid sealing member 63 contracts at a high speed.

As opposed to this, when the fluid sealing member 63 extends, as shown by the arrow 215, the covering member 62 moves in a direction away from the piston body 1. The oil 94 at the inside of the container 121 passes through the check valve 124 and flows from the second oil chamber 121b to the first oil chamber 121a. At this time, the oil 94 passes through the orifice 125. For this reason, the speed of movement of the covering member 62 can be restricted. The stopping part 62e which stops the operation of extension of the fluid sealing member 63 can suppress collision with the wall surface of the recessed part 61f at a high speed. As a result, noise or vibration can be suppressed.

Alternatively, when using the stopping part 62e to stop the operation of extension of the fluid sealing member 63, sometimes the covering member 62 springs back. Due to the covering member 62 springing back, the volume of the combustion chamber 5 temporarily changes and combustion cycle is detrimentally affected. By making the speed by which the fluid sealing member 63 extends a low speed, such springback can be suppressed. Alternatively, noise and vibration which occurs due to springback can be suppressed.

The speed reducing device of the present embodiment includes a piston inside of which oil is filled, but the speed reducing device is not limited to this embodiment. Any device which suppresses the speed by which the fluid sealing member extends can be employed. Further, the stopping part which makes extension of the fluid sealing member stop at a predetermined amount of extension is not limited to this embodiment. Any device which makes the movement of the covering member stop at a predetermined position can be employed.

In the present embodiment, a piston which is provided with the piston body 61 and the covering member 62 was explained as an example, but the invention is not limited to this. The speed reducing device of the present embodiment etc. may also be applied to a piston which does not have a covering member but is comprised of a piston body which has grooves of piston rings formed at it (see FIG. 12 to FIG. 19). For example, in a piston comprised of a piston body which has grooves of piston rings formed at it, the speed reducing device of the present embodiment may be arranged inside of the fluid sealing member 63. In this case, the cylinder 120 can be fastened to the top surface part 63b of the fluid sealing member 63.

The rest of the configuration, actions, and effects are similar to those of any of Embodiments 1 to 3, so the explanations will not be repeated here.

The above embodiments may be suitably combined. In the above figures, the same or corresponding parts are assigned the same reference signs. Note that, the above embodiments are illustrations and do not limit the invention. Further, in the embodiments, changes included in the scope of the claims are intended.

Reference Signs List

| 3 | piston |
| 61 | piston body |
| 62 | covering member |
| 63 | fluid sealing member |
| 63a, 63c | bellows part |
| 64 | heat insulating member |
| 64a | interposing member |
| 65 | auxiliary cylinder |
| 68,69 | fluid sealing member |
| 69a | bellows part |
| 71 | piston body |
| 75 | channel |
| 76 | nozzle |
| 84 | channel forming member |
| 99 | check valve |
| 157 | coolant flow rate regulator |
| 158 | coolant temperature regulator |

**Claims**

1. A combustion pressure control system of an internal combustion engine in which fuel is burned in a combustion chamber to make a piston move in a reciprocating manner, wherein the system is provided with
a fluid spring which is filled with a compressible fluid at inside and which is arranged at the piston and
a spring temperature adjustment device which adjusts a temperature of the compressible fluid at the inside of the fluid spring,
the combustion pressure control system is formed so that if a pressure of the combustion chamber reaches a predetermined pressure, a change of the pressure of the combustion chamber is used as a drive source to cause the fluid spring to compress, whereby a volume of the combustion chamber increases, and

the combustion pressure control system uses the spring temperature adjustment device to adjust the temperature of the compressible fluid and adjust the pressure inside of the fluid spring.

2. A combustion pressure control system as set forth in claim 1, wherein

the spring temperature adjustment device includes a channel through which a coolant runs inside of the piston around the fluid spring and a coolant feed device which feeds coolant to the channel,

the coolant feed device includes at least one of a coolant temperature regulator which adjusts a temperature of the coolant and a coolant flow rate regulator which adjusts a flow rate of the coolant, and

at least one of the temperature of the coolant and the flow rate of the coolant is adjusted to change the temperature of the members around the fluid spring so as to adjust the pressure inside of the fluid spring.

3. A combustion pressure control system as set forth in claim 2, wherein the coolant feed device includes a first channel through which a coolant runs between the fluid spring and the combustion chamber.

4. A combustion pressure control system as set forth in claim 3, wherein

the coolant feed device includes a second channel through which a coolant runs around the fluid spring at an opposite side from a side facing the combustion chamber and,

when raising the pressure inside of the fluid spring, at least one of the temperature of the coolant which runs through the first channel and flow rate of the coolant is adjusted, while

when lowering the pressure inside of the fluid spring, at least one of the temperature of the coolant which runs through the second channel and flow rate of the coolant is adjusted.

5. A combustion pressure control system as set forth in claim 1, wherein

the piston includes a stopping part which makes an operation of extension of the fluid spring stop at a predetermined position and

a speed reducing device which reduces a speed when the fluid spring extends.

6. A combustion pressure control system as set forth in claim 1, wherein

the piston includes a piston body which is connected to a connecting rod which transmits reciprocating operation and a covering member which has a crown surface of the piston,

the fluid spring is arranged at a surface of the piston body facing the combustion chamber, and

the covering member is formed so as to cover the fluid spring and to slide with respect to the piston body together with extension and contraction of the fluid spring.

# Fig.1

# Fig.2

# Fig. 3

COMBUSTION
CHAMBER
PRESSURE

: EMBODIMENT

: COMPARATIVE
EXAMPLE

(COMPARATIVE EXAMPLE)
IGNITION

ABNORMAL COMBUSTION
PRESSURE

CONTROL PRESSURE

(EMBODIMENT)
IGNITION

-10      0      10      20      30      40
       (TDC)                              CRANK ANGLE (°)

AMOUNT OF
CONTRACTION OF
FLUID SPRING

0

-10      0      10      20      30      40
       (TDC)                              CRANK ANGLE (°)

# Fig.4

ABNORMAL COMBUSTION REGION
AT TIME OF HIGH LOAD

ABNORMAL COMBUSTION REGION
AT TIME OF LOW LOAD

IGNITION TIMING OF
COMPARATIVE EXAMPLE

OUTPUT TORQUE

$\theta$ max

IGNITION TIMING

# Fig.5

- - - - :IGNITION AT $\theta$ max

———— :WOT AT FUEL CUT

—·—· :RETARDED IGNITION

COMBUSTION
CHAMBER
PRESSURE

ABNORMAL COMBUSTION PRESSURE

($\theta$ max)
IGNITION

IGNITION

0

-10    0    10    20    30

CRANK ANGLE(°)

## Fig.6

MAXIMUM PRESSURE OF
COMBUSTION CHAMBER

○ :NO ABNORMAL
   COMBUSTION

● :ABNORMAL
   COMBUSTION

LOAD

## Fig.7

COMBUSTION
CHAMBER
PRESSURE

———— ABNORMAL COMBUSTION PRESSURE

———— CONTROL PRESSURE

0    10    20    30

CRANK ANGLE (°)

# Fig. 8

# Fig.9

# Fig.10

# Fig.11

# Fig.12

# Fig.13

# Fig.14

# Fig.15

# Fig.16

63

63b    63a

63c

Wi    Wo

# Fig.17

| | :EMBODIMENT |
| --- | --- |
| | :COMPARATIVE EXAMPLE |

63    63a

63'    63b

63c'    63b'    63a'

63c

# Fig.18

# Fig.19

# Fig.20

# Fig.21

# Fig. 22

# Fig.23

```
                    ┌──────────────────┐
                    │      PISTON      │─── 3
                    └──────────────────┘
                             ↑
                    ┌──────────────────┐
                    │      NOZZLE      │─── 76
                    └──────────────────┘
                             ↑
158 ─┌───────────────────────────────────────┐
     │   COOLANT TEMPERATURE REGULATOR   ├──────┐         ┌──────┐── 31
     └───────────────────────────────────────┘      │         │ ECU  │
                             ↑                        │         └──────┘
157 ─┌───────────────────────────────────────┐      │
     │        FLOW RATE REGULATOR        ├──────┘
     └───────────────────────────────────────┘
                             ↑
156 ─┌───────────────────────────────────────────────┐
     │              MAIN OIL HALL               │
     └───────────────────────────────────────────────┘
                             ↑
                    ┌──────────────────────┐
                    │      OIL FILTER       │─── 155
                    └──────────────────────┘
                             ↑
153 ─┌──────────────┐        ┌──────────────────────┐
     │ RELIEF VALVE │        │      OIL COOLER       │─── 154
     └──────────────┘        └──────────────────────┘
                             ↑
                    ┌──────────────────────┐
                    │       OIL PUMP        │─── 152
                    └──────────────────────┘
                             ↑
                    ┌──────────────────────┐
                    │     OIL STRAINER      │─── 151
                    └──────────────────────┘
                             ↑
     ┌────────────────────────────────────────────────┐
     │                  OIL PAN                        │─── 77
     └────────────────────────────────────────────────┘
```

# Fig.24

# Fig.25

# Fig.26

# Fig.27

RETARDATION
CORRECTION
AMOUNT

0                    ALCOHOL CONCENTRATION

# Fig.28

CONTROL PRESSURE

ALCOHOL CONCENTRATION

# Fig.29

# Fig. 30

# Fig.31

# Fig. 32

# Fig. 33

# Fig.34

# Fig.35

# Fig.36

# Fig.37

# Fig.38

# Fig.39

# Fig. 40

# Fig. 41

# Fig. 42

FLUID SEALING MEMBER

CRANKCASE

# Fig.43

# Fig.44

**INTERNATIONAL SEARCH REPORT**

| | International application No. |
|---|---|
| | PCT/JP2010/053730 |

| A. CLASSIFICATION OF SUBJECT MATTER |
|---|
| *F02B75/04*(2006.01)i, *F02D15/02*(2006.01)i, *F02F3/00*(2006.01)i |

According to International Patent Classification (IPC) or to both national classification and IPC

| B. FIELDS SEARCHED |
|---|
| Minimum documentation searched (classification system followed by classification symbols) |
| F02B75/04, F02D15/02, F02F3/00 |

Documentation searched other than minimum documentation to the extent that such documents are included in the fields searched
Jitsuyo Shinan Koho          1922-1996     Jitsuyo Shinan Toroku Koho     1996-2010
Kokai Jitsuyo Shinan Koho    1971-2010     Toroku Jitsuyo Shinan Koho     1994-2010

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP 2001-193510 A (Osaka Gas Co., Ltd.), 17 July 2001 (17.07.2001), paragraph [0035]; fig. 2(ro) (ro: Japanese Katakana) (Family: none) | 1-6 |
| A | JP 11-107792 A (Hino Motors, Ltd.), 20 April 1999 (20.04.1999), paragraph [0009]; fig. 1 (Family: none) | 1-6 |
| A | US 1825163 A (E.SCHWETER), 29 September 1931 (29.09.1931), fig. 1 to 7 (Family: none) | 1-6 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 May, 2010 (07.05.10) | 25 May, 2010 (25.05.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2010/053730 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 59-128949 A  (Yanmar Diesel Engine Co., Ltd.),<br>25 July 1984 (25.07.1984),<br>fig. 1 to 3<br>(Family: none) | 1-6 |

Form PCT/ISA/210 (continuation of second sheet) (July 2009)

**REFERENCES CITED IN THE DESCRIPTION**

**Patent documents cited in the description**

- JP 2000230439 A
- JP 2006522895 A
- WO 9634190 A
- JP 2009507171 A